(19)

Europäisches
Patentamt
European
Patent Office
Office européen
des brevets

(11) **EP 3 594 281 A1**

(12) **EUROPEAN PATENT APPLICATION**

(43) Date of publication:
**15.01.2020 Bulletin 2020/03**

(51) Int Cl.:
**C08K 3/26** *(2006.01)*          **C08K 3/014** *(2018.01)*

(21) Application number: **18305952.6**

(22) Date of filing: **13.07.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ImerTech
75015 Paris (FR)**

(72) Inventors:
 • **COPPEL, Cyril
  13300 Salon de Provence (FR)**
 • **JAKOB, Alexandra
  Toulouse 31300 (FR)**
 • **THOMAS, Kelvin
  Truro Cornwall TR1 1AY (GB)**

(74) Representative: **Haseltine Lake Kempner LLP
Redcliff Quay
120 Redcliff Street
Bristol BS1 6HU (GB)**

(54) **ALKALINE EARTH METALS FOR RETARDING POLYMER DEGRADATION**

(57)     Alkaline earth metal carbonates having BET specific surface areas of at least 40 m$^2$/g are used in mineral fillers in polymer compositions.

EP 3 594 281 A1

**Description**

**TECHNICAL FIELD**

The present invention is directed to uses of mineral fillers, such as alkaline earth metal carbonates, in polymer compositions to retard degradation, increase thermal stability, scavenge acids, and modify combustion behaviour and combustion products, to polymer compositions comprising such mineral fillers, and to articles of manufacture formed from such polymer compositions.

**BACKGROUND TO THE INVENTION**

Certain compositions comprising polymers such as polyvinyl chloride are susceptible to degradation, particularly at elevated temperatures. Degradation may involve discolouration of the polymer compositions. Certain compositions comprising polymers such as polyvinyl chloride release toxic compounds, for example, hydrogen chloride, on degradation, particularly during combustion. Certain polymer compositions are damaged, for example, discoloured, in the presence of compounds such as hydrogen chloride. Compositions comprising polymers such as polyvinyl chlorides are widely used as coverings for electrical wires or cabling, for example, or in the manufacture of tiles.

**SUMMARY OF THE INVENTION**

According to a first aspect, the present invention is directed to use of an alkaline earth metal carbonate having a BET specific surface area of at least 40 $m^2/g$ in a polymer composition to retard degradation, for example, thermal degradation, of the polymer composition.

According to a second aspect, the present invention is directed to use of an alkaline earth metal carbonate having a BET specific surface area of at least 40 $m^2/g$ in a polymer composition to modify, for example, improve or increase the thermal stability, for example, the thermal stability as measured by the Congo Red Paper test in accordance with ISO 182-1, of the polymer composition.

According to a third aspect, the present invention is directed to use of an alkaline earth metal carbonate having a BET specific surface area of at least 40 $m^2/g$ in a polymer composition to scavenge one or more acids, for example, HCl, present in, or generated in, or generated from a source proximate to, the polymer composition, or one or more acids, for example, HCl, to which the polymer composition is exposed, for example, in use, or during heating, for example, during formation of articles of manufactures from the polymer composition.

According to a fourth aspect, the present invention is directed to use of an alkaline earth metal carbonate having a BET specific surface area of at least 40 $m^2/g$ in a polymer composition to reduce or prevent combustive release of one or more acids, for example, HCl.

According to a fifth aspect, the present invention is directed to use of an alkaline earth metal carbonate having a BET specific surface area of at least 40 $m^2/g$ in a polymer composition to reduce the amount of combustion product released on combustion of the polymer composition.

According to a sixth aspect, the present invention is directed to use of an alkaline earth metal carbonate having a BET specific surface area of at least 40 $m^2/g$ in a polymer composition to reduce combustion product toxicity and/or corrosivity, for example, acidity.

According to a seventh aspect, the present invention is directed to a method of retarding degradation, for example, thermal degradation, of a polymer composition, wherein the method comprises adding an alkaline earth metal carbonate having a BET specific surface area of at least 40 $m^2/g$ to the polymer composition.

According to an eighth aspect, the present invention is directed to a method of modifying, for example, improving or increasing the thermal stability, for example, thermal stability as measured by the Congo Red Paper test in accordance with ISO 182-1, of a polymer composition, wherein the method comprises adding an alkaline earth metal carbonate having a BET specific surface area of at least 40 $m^2/g$ to the polymer composition.

According to a ninth aspect, the present invention is directed to a method of scavenging one or more acids, for example, HCl, present in, or generated in, or generated from a source proximate to, a polymer composition, or one or more acids, for example, HCl, to which the polymer composition is exposed, for example, in use, or during heating, for example, during formation of articles of manufacture from the polymer composition, wherein the method comprises adding an alkaline earth metal carbonate having a BET specific surface area of at least 40 $m^2/g$ to the polymer composition.

According to a tenth aspect, the present invention is directed to a method of reducing or preventing combustive release of one or more acids, for example, HCl, from a polymer composition, wherein the method comprises adding an alkaline earth metal carbonate having a BET specific surface area of at least 40 $m^2/g$ to the polymer composition.

According to an eleventh aspect, the present invention is directed to a method of reducing the amount of combustion product released on combustion of a polymer composition, wherein the method comprises adding an alkaline earth metal carbonate having a BET specific surface area of at least 40 m$^2$/g to the polymer composition.

According to a twelfth aspect, the present invention is directed to a method of reducing combustion product toxicity and/or corrosivity, for example, acidity, of a polymer composition, wherein the method comprises adding an alkaline earth metal carbonate having a BET specific surface area of at least 40 m$^2$/g to the polymer composition.

According to a thirteenth aspect, the present invention is directed to a polymer composition comprising at least one polymer and a mineral filler, wherein the mineral filler comprises an alkaline earth metal carbonate having a BET specific surface area of at least 40 m$^2$/g.

According to a fourteenth aspect, the present invention is directed to an article of manufacture comprising, for example, formed from, the polymer composition according to the thirteenth aspect, wherein said article of manufacture is optionally: (a) a coating or housing for one or more electrical wires or cables, for example, electrical wire or cable insulation or jacket; or (b) a tile, for example, a floor tile.

According to a fifteenth aspect, the present invention is directed to alkaline earth metal carbonate for use as a mineral filler in a polymer composition, the alkaline earth metal carbonate having a BET specific surface area of at least 40 m$^2$/g, and, optionally, the alkaline earth metal carbonate being precipitated calcium carbonate in the form of agglomerates each consisting of a plurality of interlinked primary particles, the primary particles having, for example, an average particle size ($d_p$) from about 1.0 nm to about 35.0 nm, for example, from about 10.0 nm to about 35.0 nm, or from about 15.0 nm to about 35.0 nm, or from about 15.0 nm to about 25.0 nm.

## DETAILED DESCRIPTION OF THE INVENTION

It has surprisingly been found that the use of an alkaline earth metal carbonate having a high BET specific surface area (typically of at least 40 m$^2$/g, for example, at least 50 m$^2$/g) in a polymer composition can (i) retard degradation, for example, thermal degradation, of the polymer composition, (ii) increase thermal stability of the polymer composition, (iii) scavenge one or more acids, for example, HCl, from the polymer composition, (iv) reduce combustive release of one or more acids, for example, HCl, from the polymer composition, (v) reduce the amount of combustion product (e.g. smoke) released on combustion of the polymer composition, and (vi) reduce combustion product (e.g. smoke) toxicity and/or corrosivity, for example, acidity, on combustion of the polymer composition. The alkaline earth metal carbonate is typically added to the polymer composition as part of a mineral filler.

*Alkaline earth metal carbonates*

The mineral filler may comprise a single alkaline earth metal carbonate, i.e., a carbonate of a single alkaline earth metal. Alternatively, the mineral filler may comprise two or more alkaline earth metal carbonates, i.e. carbonates of two or more different alkaline earth metals. The alkaline earth metal carbonate (for example, each alkaline earth metal carbonate) may comprise carbonates of one or more of the following: beryllium, magnesium, calcium, strontium, barium, radium.

The alkaline earth metal carbonate may be calcium carbonate.

The alkaline earth metal carbonate may be natural calcium carbonate. The alkaline earth metal carbonate may be ground calcium carbonate (GCC).

The alkaline earth metal carbonate may be synthetic calcium carbonate. The alkaline earth metal carbonate may be precipitated calcium carbonate (PCC). Precipitated calcium carbonate (PCC) is typically a synthetic calcium carbonate, which may be made by any method known in the art.

TAPPI Monograph Series No 30, "Paper Coating Pigments", pages 34-35, the contents of which are incorporated herein by reference, describes three main commercial processes for preparing precipitated calcium carbonate. In all three processes, limestone is first calcined to produce quicklime, and the quicklime is then slaked in water to yield calcium hydroxide or milk of lime. In the first process, the milk of lime is directly carbonated with carbon dioxide gas. This process has the advantage that little or no byproduct is formed, and it is relatively easy to control the properties and purity of the calcium carbonate product. In the second process, the milk of lime is contacted with soda ash to produce, by double decomposition, a precipitate of calcium carbonate and a solution of sodium hydroxide. Typically, the sodium hydroxide is substantially completely separated from the calcium carbonate. In the third main commercial process, the milk of lime is first contacted with ammonium chloride to give a calcium chloride solution and ammonia gas. The calcium chloride solution is then contacted with soda ash to produce, by double decomposition, precipitated calcium carbonate and a solution of sodium chloride.

Alternatively, PCC may be made by reacting gypsum (calcium sulphate) with ammonium carbonate or ammonium bicarbonate.

Alternatively, PCC may be made by reacting calcium chloride with sodium carbonate or ammonium carbonate.

Alternatively, PCC may be obtained by carbonation of milk of lime in the presence of a crystallization controller selected from polyacrylic acid, citric acid, salts thereof and mixtures thereof. For instance, PCC may be prepared by one or more of the methods described in WO03/004414, the contents of which are incorporated herein by reference, particularly page 2, line 11 to page 3, line 38; page 4, line 29 to page 5, line 6; and page 5, line 36 to page 6, line 28 as well as examples 4 and 5.

In the preparation process, the concentration of calcium hydroxide in the milk of lime can have a value of from about 0.3 wt. % to about 30.0 wt. %, for example, at least about 1.0 wt. %, or at least about 2.0 wt. %, or at least about 2.5 wt. %, based on the weight of the milk of lime. It is recommended that the concentration of calcium hydroxide in the milk of lime does not exceed about 25.0 wt. %, for example, about 20.0 wt. %, or about 16.0 wt. %. For instance, the concentration of calcium hydroxide in the milk of lime might be in a low range such as from about 2.0 wt. % to about 5.0 wt. %, or in higher range such as from about 10.0 wt. % to about 20.0 wt. %, for example, from about 10.0 wt. % to about 16.0 wt. %.

In said preparation process, the temperature may vary from about 0°C to about 80°C, for example, from about 10°C to about 60°C. Usually, the temperature at the beginning of carbonation is equal to or higher than about 10°C, for example, equal to or higher than about 12°C. The temperature at the beginning of carbonation is typically equal to or lower than about 30°C, for example, equal to or lower than about 25°C, or equal to or lower than about 20°C. The temperature at the beginning of carbonation might for instance be about 12°C, or about 15°C, or about 18°C. The temperature at the end of carbonation might be higher, for example, from about 10°C to about 80°C, or from about 15°C to about 65°C, or from about 35°C to about 65°C.

In the preparation process, milk of lime is carbonated by reaction of the latter with carbon dioxide gas. Carbon dioxide gas having a concentration of carbon dioxide varying from about 3.0 % to about 100 % could be used with success. However, it is typical to use carbon dioxide gas for which the concentration is from about 10 % to 60 %, for example, from about 15 % to about 40 %, or from about 20 % to about 30 %, the carbon dioxide gas being diluted with air.

Some additives might also be further added during the carbonation step, such as isoascorbic acid, to reduce yellowness of the resulting calcium carbonate particles. Said preparation process typically leads to a precipitated calcium carbonate slurry comprising for instance about 3.0 wt. % to about 25.0 wt. % of PCC, based on the weight of the slurry.

Precipitated calcium carbonate particles might be filtered, for example through a planar filter, and dried, for instance in an oven, by spraying into a stream of hot air (spray drying), or by the action of radiation such as infrared radiation (epiradiator), typically in an oven or by the action of radiation such as infrared radiation. The resulting particles might then be further milled, for instance in a pin mill apparatus.

Such processes for making PCC typically result in very pure calcium carbonate crystals, which may be referred to as "elementary" or "primary" particles. In this context, the term "elementary particle" or "primary particle" refers to a physically and chemically autonomous entity. The elementary or primary particles may have a variety of different shapes and sizes, depending on the specific reaction process that is used. Mixtures of different morphologies may also be used.

The main forms of PCC crystals are aragonite and calcite. Aragonite crystals are needle-shaped and may be randomly aggregated. Calcite crystals may be pseudo-spherical, cubic or scalenohedral in morphology. For example, calcite crystals may have rhombohedral morphology.

The alkaline earth metal carbonate may be porous calcium carbonate. The alkaline earth metal carbonate may be porous precipitated calcium carbonate (porous PCC). The term "porous" as used in relation to calcium carbonate (and, in particular, PCC) refers to the presence of voids that allow gases and/or liquids to pass through the calcium carbonate (PCC). In particular, the term "porous" refers to the presence of voids in between the elementary or primary particles of calcium carbonate (PCC) that are interlinked to form calcium carbonate (PCC) aggregates.

BET particle surface area may be measured according to the BET method, AFNOR standard X11-621 and 622 or ISO 9277. The alkaline earth metal carbonate, for example, calcium carbonate (e.g., PCC), or porous calcium carbonate (e.g., porous PCC), typically has a BET specific surface area of at least about 40 m$^2$/g. The alkaline earth metal carbonate may have a BET specific surface area of at least about 45 m$^2$/g, for example, at least about 50 m$^2$/g, or at least about 55 m$^2$/g, or at least about 60 m$^2$/g, or at least about 65 m$^2$/g, or at least about 70 m$^2$/g, or at least about 75 m$^2$/g, or at least about 80 m$^2$/g. The alkaline earth metal carbonate, for example, calcium carbonate (e.g., PCC), or porous calcium carbonate (e.g., porous PCC), may have a BET specific surface area of no greater than about 200 m$^2$/g, for example, no greater than about 150 m$^2$/g. The alkaline earth metal carbonate, for example, calcium carbonate (e.g., PCC), or porous calcium carbonate (e.g., porous PCC), may have a BET specific surface area of from about 40 m$^2$/g to about 200 m$^2$/g, for example, from about 45 m$^2$/g to about 200 m$^2$/g, or from about 40 m$^2$/g to about 150 m$^2$/g, or from about 50 m$^2$/g to about 200 m$^2$/g, or from about 50 m$^2$/g to about 150 m$^2$/g, or from about 60 m$^2$/g to about 150 m$^2$/g, or from about 70 m$^2$/g to about 150 m$^2$/g, or from about 70 m$^2$/g to about 125 m$^2$/g, or from about 70 m$^2$/g to about 100 m$^2$/g.

Particle size properties referred to herein may be measured in a well-known manner by sedimentation of the particulate filler or material in a fully dispersed condition in an aqueous medium using a Sedigraph 5100 machine as supplied by Micromeritics Instruments Corporation, Norcross, Georgia, USA (web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (e.s.d), less than given e.s.d values. The mean particle size $d_{50}$ is the value determined in this way of the particle e.s.d at which there are 50% by weight of the particles which have an equivalent spherical diameter less than that $d_{50}$ value. The $d_{98}$, $d_{90}$ and the $d_{10}$ are the values determined in this way of the particle e.s.d. at which there are 98%, 90% and 10% respectively by weight of the particles which have an equivalent spherical diameter less than that $d_{98}$, $d_{90}$ or $d_{10}$ value.

Particle size properties may also be measured by wet Malvern laser scattering (standard ISO 13320-1). In this technique, the size of particles in powders, suspensions and emulsions may be measured using the diffraction of a laser beam, based on the application of Mie theory. Such a machine, for example a Malvern Mastersizer S (as supplied by Malvern instruments) provides measurements and a plot of the cumulative percentage by volume of particles having a size, referred to in the art as the "equivalent spherical diameter" (e.s.d), less than given e.s.d values. The mean particle size $d_{50}$ is the value determined in this way of the particle e.s.d. at which there are 50% by volume of the particles which have an equivalent spherical diameter less than that $d_{50}$ value. For the avoidance of doubt, the measurement of particle size using laser light scattering is not an equivalent method to the sedimentation method referred to above.

Throughout this specification and the appended claims, unless stated otherwise, references to $d_{10}$, $d_{50}$, $d_{90}$ or $d_{98}$ are references to such values measured by laser scattering.

The alkaline earth metal carbonate, for example, calcium carbonate (e.g., PCC), or porous calcium carbonate (e.g., porous PCC), may have a $d_{50}$ no less than about 0.1 $\mu$m, for example, or no less than about 0.5 $\mu$m, or no less than about 1.0 $\mu$m, or no less than about 1.5 $\mu$m, or no less than about 2.0 $\mu$m, or no less than about 2.5 $\mu$m, or no less than about 3.0 $\mu$m. The alkaline earth metal carbonate, for example, calcium carbonate (e.g., PCC), or porous calcium carbonate (e.g., porous PCC), may have a $d_{50}$ no greater than about 50.0 $\mu$m, for example, no greater than about 40.0 $\mu$m, or no greater than about 30.0 $\mu$m, or no greater than about 20.0 $\mu$m, or no greater than about 15.0 $\mu$m, or no greater than about 10.0 $\mu$m, or no greater than about 9.0 $\mu$m, or no greater than about 8.0 $\mu$m. The alkaline earth metal carbonate, for example, calcium carbonate (e.g., PCC), or porous calcium carbonate (e.g., porous PCC), may have a $d_{50}$ of from about 0.1 $\mu$m to about 50.0 $\mu$m, for example, from about 0.1 $\mu$m to about 40.0 $\mu$m, or from about 0.1 $\mu$m to about 30.0 $\mu$m, or from about 0.1 $\mu$m to about 20.0 $\mu$m, or from about 0.1 $\mu$m to about 15.0 $\mu$m, or from about 0.1 $\mu$m to about 10.0 $\mu$m, or from about 0.1 $\mu$m to about 9.0 $\mu$m, or from about 0.1 $\mu$m to about 8.0 $\mu$m, or from about 0.5 $\mu$m to about 50.0 $\mu$m, or from about 0.5 $\mu$m to about 40.0 $\mu$m, or from about 0.5 $\mu$m to about 30.0 $\mu$m, or from about 0.5 $\mu$m to about 20.0 $\mu$m, or from about 0.5 $\mu$m to about 15.0 $\mu$m, or from about 0.5 $\mu$m to about 10.0 $\mu$m, or from about 0.5 $\mu$m to about 9.0 $\mu$m, or from about 0.5 $\mu$m to about 8.0 $\mu$m, or from about 1.0 $\mu$m to about 50.0 $\mu$m, or from about 1.0 $\mu$m to about 40.0 $\mu$m, or from about 1.0 $\mu$m to about 30.0 $\mu$m, or from about 1.0 $\mu$m to about 20.0 $\mu$m, or from about 1.0 $\mu$m to about 15.0 $\mu$m, or from about 1.0 $\mu$m to about 10.0 $\mu$m, or from about 1.0 $\mu$m to about 9.0 $\mu$m, or from about 1.0 $\mu$m to about 8.0 $\mu$m, or from about 2.0 $\mu$m to about 50.0 $\mu$m, or from about 2.0 $\mu$m to about 40.0 $\mu$m, or from about 2.0 $\mu$m to about 30.0 $\mu$m, or from about 2.0 $\mu$m to about 20.0 $\mu$m, or from about 2.0 $\mu$m to about 15.0 $\mu$m, or from about 2.0 $\mu$m to about 10.0 $\mu$m, or from about 2.0 $\mu$m to about 9.0 $\mu$m, or from about 2.0 $\mu$m to about 8.0 $\mu$m, or from about 2.5 $\mu$m to about 50.0 $\mu$m, or from about 2.5 $\mu$m to about 40.0 $\mu$m, or from about 2.5 $\mu$m to about 30.0 $\mu$m, or from about 2.5 $\mu$m to about 20.0 $\mu$m, or from about 2.5 $\mu$m to about 15.0 $\mu$m, or from about 2.5 $\mu$m to about 10.0 $\mu$m, or from about 2.5 $\mu$m to about 9.0 $\mu$m, or from about 2.5 $\mu$m to about 8.0 $\mu$m, or from about 3.0 $\mu$m to about 50.0 $\mu$m, or from about 3.0 $\mu$m to about 40.0 $\mu$m, or from about 3.0 $\mu$m to about 30.0 $\mu$m, or from about 3.0 $\mu$m to about 20.0 $\mu$m, or from about 3.0 $\mu$m to about 15.0 $\mu$m, or from about 3.0 $\mu$m to about 10.0 $\mu$m, or from about 3.0 $\mu$m to about 9.0 $\mu$m, or from about 3.0 $\mu$m to about 8.0 $\mu$m, or from about 4.0 $\mu$m to about 20.0 $\mu$m, or from about 4.0 $\mu$m to about 15.0 $\mu$m, or from about 4.0 $\mu$m to about 10.0 $\mu$m, or from about 4.0 $\mu$m to about 9.0 $\mu$m, or from about 5.0 $\mu$m to about 10.0 $\mu$m, or from about 5.0 $\mu$m to about 9.0 $\mu$m, or from about 6.0 $\mu$m to about 10.0 $\mu$m, or from about 6.0 $\mu$m to about 9.0 $\mu$m, or from about 6.0 $\mu$m to about 8.0 $\mu$m, or from about 7.0 $\mu$m to about 8.0 $\mu$m, or from about 1.0 $\mu$m to about 7.0 $\mu$m, or from about 1.0 $\mu$m to about 6.0 $\mu$m, or from about 1.0 $\mu$m to about 5.0 $\mu$m, or from about 2.0 $\mu$m to about 7.0 $\mu$m, or from about 2.0 $\mu$m to about 6.0 $\mu$m, or from about 2.0 $\mu$m to about 5.0 $\mu$m, or from about 2.0 $\mu$m to about 4.0 $\mu$m, or from about 3.0 $\mu$m to about 4.0 $\mu$m. The alkaline earth metal carbonate, for example, calcium carbonate (e.g., PCC), or porous calcium carbonate (e.g., porous PCC), may have a $d_{50}$ of about 3.3 $\mu$m. The alkaline earth metal carbonate, for example, calcium carbonate (e.g., PCC), or porous calcium carbonate (e.g., porous PCC), may have a $d_{50}$ of about 3.4 $\mu$m. The alkaline earth metal carbonate, for example, calcium carbonate (e.g., PCC), or porous calcium carbonate (e.g., porous PCC), may have a $d_{50}$ of about 7.6 $\mu$m. The alkaline earth metal carbonate, for example, calcium carbonate (e.g., PCC), or porous calcium carbonate (e.g., porous PCC), may have a $d_{50}$ of about 7.7 $\mu$m.

The alkaline earth metal carbonate, for example, (e.g. porous) calcium carbonate (e.g., PCC), may have a $d_{10}$ of no less than about 0.01 $\mu$m, for example, no less than about 0.1 $\mu$m, or no less than about 0.5 $\mu$m, or no less than about 1.0 $\mu$m, or no less than about 1.5 $\mu$m. The alkaline earth metal carbonate, for example, (e.g. porous) calcium carbonate (e.g., PCC), may have a $d_{10}$ of no greater than about 15.0 $\mu$m, for example, no greater than about 10.0 $\mu$m, or no greater than about 5.0 $\mu$m, or no greater than about 4.0 $\mu$m, or no greater than about 3.0 $\mu$m, or no greater than about 2.0 $\mu$m. The alkaline earth metal carbonate, for example, (e.g. porous) calcium carbonate (e.g., PCC), may have a $d_{10}$ of from about 0.01 $\mu$m to about 15.0 $\mu$m, for example, from about 0.1 $\mu$m to about 10.0 $\mu$m , or from about 0.1 $\mu$m to about 5.0 $\mu$m, from about 0.1 $\mu$m to about 4.0 $\mu$m, or from about 0.5 $\mu$m to about 3.0 $\mu$m, or from about 1.0 $\mu$m to about 2.0 $\mu$m, or from about 1.5 $\mu$m to about 2.0 $\mu$m, or from about 1.0 $\mu$m to about 3.0 $\mu$m, or from about 2.0 $\mu$m

to about 3.0 $\mu$m.

The alkaline earth metal carbonate, for example, (e.g. porous) calcium carbonate (e.g., PCC), may have a $d_{90}$ of no less than about 0.1 $\mu$m, for example, or no less than about 0.5 $\mu$m, or no less than about 1.0 $\mu$m, or no less than about 2.0 $\mu$m, or no less than about 3.0 $\mu$m, or no less than about 4.0 $\mu$m, or no less than about 5.0 $\mu$m, or no less than about 5.5 $\mu$m, or no less than about 10.0 $\mu$m, or no less than about 15.0 $\mu$m, or no less than about 20.0 $\mu$m, or no less than about 25.0 $\mu$m, or no less than about 30.0 $\mu$m. The alkaline earth metal carbonate, for example, (e.g. porous) calcium carbonate (e.g., PCC), may have a $d_{90}$ of no greater than about 50.0 $\mu$m, for example, no less than about 45.0 $\mu$m, or no less than about 40.0, or no less than about 30.0 $\mu$m, or no less than about 20.0 $\mu$m, or no less than about 15.0 $\mu$m, or no less than about 10.0 $\mu$m, or no greater than about 9.0 $\mu$m, or no greater than about 8.0 $\mu$m, or no greater than about 7.0 $\mu$m, or no greater than about 6.0 $\mu$m. The alkaline earth metal carbonate, for example, (e.g. porous) calcium carbonate (e.g., PCC), may have a $d_{90}$ of from about 0.1 $\mu$m to about 10.0 $\mu$m, for example, from about 1.0 $\mu$m to about 10.0 $\mu$m, or from about 2.0 $\mu$m to about 9.0 $\mu$m, or from about 3.0 $\mu$m to about 8.0 $\mu$m, or from about 4.0 $\mu$m to about 7.0 $\mu$m, or from about 5.0 $\mu$m to about 6.0 $\mu$m, or from about 0.1 $\mu$m to about 50.0 $\mu$m, or from about 10.0 $\mu$m to about 50.0 $\mu$m, or from about 20.0 $\mu$m to about 50.0 $\mu$m, or from about 30.0 $\mu$m to about 40.0 $\mu$m.

It may be that the alkaline earth metal carbonate, for example, calcium carbonate (e.g., PCC), or porous calcium carbonate (e.g., porous PCC), comprises (e.g. consists of) agglomerates of particles, for example, (e.g. porous) calcium carbonate (e.g., PCC) particles. Each agglomerate may comprise (e.g. consist of) a plurality of interlinked primary particles, for example, interlinked primary (e.g. porous) calcium carbonate (e.g., PCC) particles. The primary particles may have an average particle size ($d_p$) of no less than about 0.5 nm, for example, no less than about 1.0 nm, or no less than about 5.0 nm, or no less than about 10.0 nm, or no less than about 15.0 nm, or no less than about 18.0 nm, or no less than about 20.0 nm, or no less than about 25.0 nm, or no less than about 30.0 nm. The primary particles may have an average particle size ($d_p$) of no greater than about 100.0 nm, or no greater than about 80.0 nm, or no greater than about 60.0 nm, or no greater than about 50.0 nm, or no greater than about 40.0 nm, or no greater than about 35.0 nm, or no greater than about 30.0 nm, or no greater than about 25.0 nm, or no greater than about 20.0 nm. The primary particles may have an average particle size ($d_p$) of from about 0.5 nm to about 100.0 nm, for example, from about 1.0 nm to about 50.0 nm, or from about 5.0 nm to about 50.0 nm, or from about 10.0 nm to about 50.0 nm, or from about 10.0 nm to about 40.0 nm, or from about 15.0 nm to about 35.0 nm, or from about 1.0 nm to about 25.0 nm, or from about 5.0 nm to about 25.0 nm, or from about 10.0 nm to about 25.0 nm, or from about 15.0 nm to about 25.0 nm, or from about 15.0 nm to about 20.0 nm, or from about 18.0 nm to about 20.0 nm, or from about 20.0 nm to about 100.0 nm, or from about 20.0 nm to about 50.0 nm, or from about 20.0 nm to about 40.0 nm, or from about 25.0 nm to about 50.0 nm, or from about 25.0 nm to about 40.0 nm, or from about 25.0 nm to about 35.0 nm, or from about 30.0 nm to about 35.0 nm. The primary particles may have an average particle size ($d_p$) of about 19.0 nm. The primary particles may have an average particle size ($d_p$) of about 32.0 nm.

Average primary particle size ($d_p$) is typically measured by permeability, which is described below:

$d_p$ is determined by permeability measured according to a method derived from BS 4359-2. The basis of this method is the measurement of the air permeability of a pellet, which is analogous to the "Blaine" or the "Lea & Nurse method". The calculation of the $d_p$ derives from the Carman & Malherbe formula:

$$q \times L = \frac{1.05\,\varepsilon^2}{(1-\varepsilon)^2}\,ds^2 + \frac{2.88\,\varepsilon^2}{1-\varepsilon}\,ds$$

with

$$\varepsilon = 1 - \frac{W}{A \times L \times D}$$

It can be shown that the mean particle diameter ds which is determined according to the Carman & Malherbe formula is not absolutely independent from the porosity of the pellet. Consequently, a correction was brought considering the reference porosity $\varepsilon = 0.45$ and the $d_p$ was calculated according to the formula:

$$dp = ds \times e^{-3.2(\varepsilon - 0,45)}$$

Definitions and unities are as follows:

q = volumetric rate of air flow passed through the PCC pellet ($cm^3/g$),

ε = porosity,

W = weight of PCC,

L = thickness of the pellet,

D = density of PCC ($g/cm^3$),

A = area of the cross section of the pellet ($cm^2$),

ds = mean particle diameter according to Carman & Malherbe (μm), and

dp = mean particle diameter (μm).

The agglomerates of alkaline metal carbonate, for example, calcium carbonate (e.g., PCC), may comprise (e.g. be) nanofiber and/or nanochain-like agglomerates, for example, comprising a plurality of interlinked calcite crystals. The calcite crystals may have a rhombohedral morphology. The nanofiber and/or nanochain-like agglomerates may be aggregated to form microshells.

Rhombohedral crystals may, for example, form elongated entities (e.g. nanofibers and/or nanochain like agglomerates). Scalenohedral crystals are elongated entities per se. The alkaline metal carbonate crystals may have, for example, an elongated shape (i.e. an aspect ratio greater than 1). The alkaline metal carbonate crystals may have, for example, an aspect ratio equal to or greater than about 2 or equal to or greater than about 3 or equal to or greater than about 4 or equal to or greater than about 5. The alkaline metal carbonate crystals may have, for example, an aspect ratio equal to or less than about 50 or equal to or less than about 40 or equal to or less than about 20 or equal to or less than about 15 or equal to or less than about 10. Aspect ratio refers to the ratio of a "higher dimension" (L) of a particle, typically its length over a "smaller dimension" of the particle, usually its diameter. Aspect ratio may be determined by image analysis using SEM or TEM and working out the arithmetic mean aspect ratio.

The alkaline metal carbonate, for example, calcium carbonate (e.g. PCC) may, for example, at least partially comprise elongated entities. The alkaline metal carbonate, for example, calcium carbonate (e.g. PCC) may, for example, comprise at least about 1 % elongated entities based on the weight of the calcium carbonate particles. For example, the alkaline metal carbonate, for example, calcium carbonate (e.g. PCC) may comprise at least about 8 % or at least about 10 % or at least about 15 % elongated entities based on the weight of the calcium carbonate particles.

Scalenohedral crystals may, for example, have an average primary particle size ranging from about 80 nm to about 300 nm, for example from about 100 nm to about 200 nm. This refers to the smaller dimension of the particle.

The elongated entities (e.g. scalenohedral primary particles) may, for example, aggregate to form microshells.

Elementary particles may be aggregated in various ways to form a secondary structure. For example, the elementary particles of the alkaline metal carbonate, for example, calcium carbonate (e.g. PCC) may be at least partially in the form of nanofibers or nanochain like agglomerates. For example, the alkaline metal carbonate, for example, calcium carbonate (e.g. PCC) may comprise, consist essentially of or consist of nanofibers or nanochain like agglomerates. These can be described as constituted by at least two interconnected primary particles and therefore having an elongated morphology. For example, the elementary particles of the alkaline metal carbonate, for example, calcium carbonate (e.g. PCC) may be at least partially in the form of individual primary particles and/or may be randomly aggregated.

Each nanofiber and/or nanochain like agglomerate may comprise from about 2 to about 20 primary particles. For example, each nanofiber and/or nanochain like agglomerate may comprise from about 2 to about 15 or from about 2 to about 10 or from about 2 to about 8 primary particles.

In the terms "nanofibers" and "nanochain like agglomerate", the prefix "nano" means that the nanofibers or nanochain like agglomerates have at least one characteristic dimension at the nanoscale, in particular a characteristic dimension which is, on average, less than 500 nm, for example less than 250 nm or less than 200 nm or less than 100 nm. In nanofibers or nanochain like agglomerates, said characteristic dimension is the average diameter (i.e. the width of the nanofiber that corresponds to $d_p$).

The term "nanofiber" intends to denote an elongated entity having a characteristic dimension, i.e. average diameter, less than 500 nm, for example less than 250 nm or less than 200 nm or less than 100 nm. The term "nanochain-like agglomerate" intends to denote an elongated entity having a characteristic dimension, i.e. average diameter, less than 500 nm, for example less than 250 nm or less than 200 nm or less than 100 nm. Nanofibers mainly differ from nanochain-like agglomerates in that the individual primary particles cannot be distinguished anymore and form nanofibers which appear to be homogeneous and even, for example on electron microscopy photographs, whatever the magnification. In nanochain-like agglomerates, the primary particles retain their individuality and remain visible, for example on electron microscopy. Nanochain-like agglomerates can also be named "nanorosaries".

The average primary particle size ($d_p$) forming the nanofibers and/or nanochain like agglomerates is generally close to the smaller dimension of the scalenohedron elementary particles and to the average diameter of the nanofibers and/or nanochain like agglomerates. The average primary particle size ($d_p$) may, for example, differ from the smaller dimension of the scalenohedral particle and/or from the average diameter of the nanofibers and/or nanochain like agglomerates by less than 50 % or less than 25 % or less than 10 %.

The term "at least partially present in the form of nanofibers or nanochain like agglomerates" denotes that the precipitated calcium carbonate particles are generally present in the form of nanofibers or nanochain like agglomerates in an amount of at least 1 % by weight of the calcium carbonate particles. Often, precipitated calcium carbonate particles are present in the form of nanofibers or nanochain-like agglomerates in an amount of at least 8 % by weight of the calcium carbonate particles. For example, precipitated calcium carbonate particles may be present in the form of nanofibers or nanochain-like agglomerates in an amount of at least 10 % by weight of the calcium carbonate particles or at least about 11 % or at least about 12 % or at least about 13 % or at least about 14 % or at least about 15 % by weight of the calcium carbonate. For example, the precipitated calcium carbonate particles may be present in the form of nanofibers or nanochain-like agglomerates in an amount up to about 100 % or up to about 99 % or up to about 98 % or up to about 95 % or up to about 90 % or up to about 85 % or up to about 80 % or up to about 75 % by weight of the calcium carbonate particles. The remaining precipitated calcium carbonate particles that are not in the form of nanofibers or nanochain-like agglomerates may, for example, be present in the form of individual primary particles or aggregates (e.g. random aggregates) of individual primary particles.

The amount of nanofibers or nanochain-like agglomerates can be evaluated relying on SEM (Scanning Electron Microscopy) or TEM (Transmission Electron Microscopy) image analysis. The obtained values correspond to the number of elementary particles that belongs to the nanofibers in respect to the total number of elementary nanoparticles, the measurement being performed in areas of acceptable resolution. The average is thus the arithmetic mean. It is preferred to determine the amount in a homogenized sample. For the determination using SEM, the calcium carbonate particles are metallized: The samples are directly placed on a graphite tape, then metallized with platinum for 1 minute under a vacuum of $10^{-1}$ Pa with a beam intensity of 6 mA. A Hitachi S-4800 SEM was used for the measurements. This can also be used to determine the average diameter of the scalendohedral primary particles and/or the average diameter of the nanofibers and/or nanochain-like agglomerates. The average length and diameter can be estimated by image analysis of pictures taken by SEM or TEM, measuring directly the length of particles or measuring the length of rectangles comprising the particles.

When measuring average diameters, length etc. using SEM or TEM, magnification should be chosen in a reasonable way, such that the particles would be reasonably defined and present in a sufficient number. In such conditions, the analysis of a reasonable number of pictures, for instance around 10 pictures, should allow accurate characterization of the particles. If magnification is too low, the number of particles would be too high and the resolution too low. If magnification is too high, with for instance less than 10 particles per picture, the number of pictures to be analysed would be too high and several hundreds of pictures should be analysed to give accurate measurements. The method must therefore be chosen to provide a good dispersion degree of the nanoparticles in the sample. A magnification of 50k when using SEM may, for example, be appropriate.

The nanofibers and/or nanochain-like agglomerates may have an average length ranging from about 20 nm to about 2000 nm. For example, the nanofibers and/or nanochain-like agglomerates may have an average length ranging from about 20 nm to about 1900 nm or from about 20 nm to about 1800 nm or from about 20 nm to about 1700 nm or from about 20 nm to about 1600 nm or from about 20 nm to about 1500 nm or from about 20 nm to about 1400 nm or from about 20 nm to about 1300 nm or from about 20 nm to about 1200 nm or from about 20 nm to about 1100 nm or from about 20 nm to about 1000 nm. For example, the nanofibers and/or nanochain-like agglomerates may have an average length ranging from about 50 nm to about 1000 nm or from about 50 nm to about 900 nm or from about 50 nm to about 800 nm or from about 100 nm to about 700 nm or from about 100 nm to about 600 nm or from about 100 nm to about 500 nm or from about 150 nm to about 500 nm or from about 200 nm to about 500 nm. For example, the nanofibers and/or nanochain-like agglomerates may have an average length ranging from about 100 nm to about 400 nm or from about 100 nm to about 300 nm or from about 150 nm to about 250 nm.

The secondary structure may, for example, be further aggregated in a variety of ways to form a tertiary structure.

For example, the nanofibers or nanochain-like aggregates of the precipitated calcium carbonate may be further aggregated to form microshells or microsheaves. Microshells may be composed of tens to hundreds of nanofibers or nanochain-like agglomerates. In such a case, the nanofibers or nanochain-like agglomerates are usually visible at least on the inner part of the microshell like agglomerates. Microsheaves are also denoted as "faggots". The nanofibres or nanochains are aggregated parallel to one another, in a surprising organized fashion, in such a microsheave. Such a microsheave generally composed of several tens of similar nanofibres and/or nanochains. This number is preferably greater than 100. Microsheaves comprising more than 10,000 nanofibres and/or nanochains are exceptional. The microsheaves may, for example, have a diameter equal to or greater than about 50 nm, for example between about 100 nm and about 500 nm. The length of the microsheaves may, for example, be similar to the length of the nanofibers and/or nanochain-like agglomerates. Generally, the length of the microsheave is greater than that of the fibres. For example, the microsheaves may have a length between about 500 nm and about 1500 nm. Alternatively, the nanofibers or nanochain-like agglomerates may be aggregated in a random fashion. Hereinafter, the present invention may tend to be discussed in terms of microshells. However, the invention should not be construed as being limited to such embodiments.

In certain embodiments, the alkaline metal carbonate, for example, calcium carbonate (e.g. PCC) is at least partially present in the form of microshells comprising, consisting essentially of or consisting of nanofibers or nanochain like agglomerates by weight of the calcium carbonate particles. In certain embodiments, at least about 1 % of the alkaline metal carbonate, for example, calcium carbonate (e.g. PCC) particles are in the form of microshells comprising, consisting essentially of or consisting of nanofibers or nanochain-like agglomerates by weight of the calcium carbonate particles. For example, at least about 8 % or at least about 10 % or at least about 15 % or at least about 20 % or at least about 25 % or at least about 30 % or at least about 35 % or at least about 40 % or at least about 45 % or at least about 50 % of the alkaline metal carbonate, for example, calcium carbonate (e.g. PCC) is present in the form of microshells comprising, consisting essentially of or consisting of nanofibers or nanochain-like agglomerates by weight of the calcium carbonate particles. In certain embodiments, up to about 100 % of the alkaline metal carbonate, for example, calcium carbonate (e.g. PCC) particles are in the form of microshells comprising, consisting essentially of or consisting of nanofibers or nanochain-like agglomerates by weight of the calcium carbonate particles. For example, up to about 99 % or up to about 98 % or up to about 95 % or up to about 90 % or up to about 85 % or up to about 80 % or up to about 75 % or up to about 70 % of the alkaline metal carbonate, for example, calcium carbonate (e.g. PCC) particles are in the form of microshells comprising, consisting essentially of or consisting of nanofibers or nanochain-like agglomerates by weight of the calcium carbonate particles.

The alkaline metal carbonate, for example, calcium carbonate (e.g. PCC) may, for example, comprise microshells of nanofibers and/or nanochain-like agglomerates, microshells of scalenohedral crystals, microshells of nanofibers and/or nanochain-like agglomerates and scalenohedral crystals, or a combination of one or more thereof.

The alkaline metal carbonate, for example, calcium carbonate (e.g. PCC) may, for example, comprise nanoplates. For example, the primary particles may take the shape of nanoplates. Each nanoplate may, for example, have a thickness equal to or greater than about 20 nm. For example, each nanoplate may independently have a thickness ranging from about 20 nm to about 50 nm. The nanoplates may, for example, have a diameter/thickness ratio equal to or greater than about 5. The diameter/thickness ratio may, for example, be equal to or less than about 100 or equal to or less than about 10.

The nanoplates may, for example, be superimposed to form "accordians of nanoplates". The length of the accordians may, for example, be equal to or greater than about 200 nm. For example, the length of the accordians may be equal to or less than about 1500 nm.

The agglomerates of alkaline metal carbonate, for example, calcium carbonate (e.g., PCC), may comprise (e.g. be) substantially spherical agglomerates and/or randomly aggregated agglomerates of primary particles, such as, for example, primary particles having an average particle size ($d_p$) of from about 1.0 nm to about 25.0 nm, or from about 5.0 nm to about 25.0 nm, or from about 10.0 nm to about 25.0 nm, or from about 15.0 nm to about 25.0 nm, or from about 15.0 nm to about 20.0 nm, or from about 16.0 nm to about 22.0 nm, or from about 17.0 nm to about 21.0 nm, or from about 18.0 nm to about 20.0 nm. It may be that the agglomerates of alkaline metal carbonate, for example, calcium carbonate (e.g., PCC), do not comprise microshells or nanofibers of primary particles. It may be that the agglomerates of alkaline metal carbonate, for example, calcium carbonate (e.g., PCC), are not nanochain-like agglomerates of primary particles. It may be that the agglomerates of alkaline metal carbonate, for example, calcium carbonate (e.g., PCC), comprise randomly aggregated primary particles, for example, primary particles which are randomly aggregated to form a porous structure. In such embodiments, the primary particles may be substantially spherical, for example, as viewed using SEM at a magnification of about 50.0k. In such embodiments, the primary particles may have an average particle size ($d_p$) of from about 1.0 nm to about 25.0 nm, or from about 5.0 nm to about 25.0 nm, or from about 10.0 nm to about 25.0 nm, or from about 15.0 nm to about 25.0 nm, or from about 15.0 nm to about 20.0 nm, or from about 16.0 nm to about 22.0 nm, or from about 17.0 nm to about 21.0 nm, or from about 18.0 nm to about 20.0 nm.

In certain embodiments, the alkaline metal carbonate, for example, calcium carbonate (e.g., PCC) comprises microshells of nanofibers and/or nanochain-like agglomerates, wherein the nanofibers and/or nanochain-like agglomerates have an average length ranging from about 100 nm to about 500 nm, the primary particles have an average diameter ($d_p$) ranging from about 20 nm to about 100 nm and the alkaline metal carbonate, for example, calcium carbonate (e.g., PCC) has a $d_{50}$ ranging from about 0.1 $\mu$m to about 5 $\mu$m.

The alkaline metal carbonate, for example, calcium carbonate (e.g., PCC) may, for example, have an aggregation ratio, defined as the ratio of the aggregate median size ($d_{50}$) on the average diameter ($d_p$) of the primary particles, higher than 1. For example, the alkaline metal carbonate, for example, calcium carbonate (e.g., PCC) may have an aggregation ratio equal to or greater than about 2 or equal to or greater than about 5 or equal to or greater than about 10 or equal to or greater than about 20. For example, the alkaline metal carbonate, for example, calcium carbonate (e.g., PCC) may have an aggregation ratio equal to or less than about 300 or equal to or less than about 100 or equal to or less than about 50.

The alkaline metal carbonate, for example, calcium carbonate (e.g., PCC) may optionally be surface-modified, for example by coating. The coating may consist of, consist essentially of, or comprise a silane or any salt thereof, for example an organic silane. The alkaline metal carbonate, for example, calcium carbonate (e.g., PCC) may be coated with a fatty acid or salt thereof. For example, the alkaline metal carbonate, for example, calcium carbonate (e.g., PCC) may be coated with stearic acid or a stearate. The level of coating may be about 0.1 to about 10 wt% based on the total weight of the coated alkaline metal carbonate, for example, calcium carbonate (e.g., PCC), for example between about 0.1 and about 3 wt%, for example between about 0.5 or 0.6 or 0.7 or 0.8 and about 2.0 wt% e.g. about 1.5 wt%. The term "coating" used herein is to be understood broadly, and is not limited, for example, to uniform coatings or to coatings which cover the entire surface area of a particle. Particles in which discrete regions of the surface are modified with a coating will be understood as being coated within the terms of certain embodiments of the present invention. In certain embodiments, the porous alkaline metal carbonate, for example, calcium carbonate (e.g., PCC) is not surface-modified or coated.

Particle pore size properties (e.g. total pore volume and average pore size) may be measured using the cylindrical shape assumption (4V/A), which is part of the BJH (Barrett-Joyner-Halenda) model. The BJH model is derived from the same $N_2$ absorption isotherm that is used for BET surface area calculation (measurement according to the BET method, AFNOR standard X11-621 and 622 or ISO 9277). The BJH model is described in Barrett et al., Am. Chem. Soc., 73 (1951), pages 373 to 380, the contents of which are incorporated herein by reference. A Micromeritics TRISTAR 3000 and Micromeritics VACPREP 061 may, for example, be used. The samples may, for example, be degassed in an oven overnight at 105°C, followed by 180°C for 30 minutes under nitrogen flow and cooling for 30 minutes under nitrogen flow. The isotherm may, for example, be measured for relative pressures $P/P_0$ ranging from 0.05 to 0.98. Average pore size refers to pore diameter. Porous volume is cumulative and obtained by BJH on the desorption branch for pore sizes between 1.7 and 50 nm.

The alkaline earth metal carbonate, for example, calcium carbonate (e.g., PCC), or porous calcium carbonate (e.g., porous PCC), may have an average (BJH) pore size no less than about 1.0 nm, for example, no less than about 2.0 nm, or no less than about 3.0 nm, or no less than about 4.0 nm, or no less than about 5.0 nm, or no less than about 8.0 nm, or no less than about 10.0 nm. The alkaline earth metal carbonate, for example, calcium carbonate (e.g., PCC), or porous calcium carbonate (e.g., porous PCC), may have an average (BJH) pore size of no greater than about 100.0 nm, for example, no greater than about 50.0 nm, or no greater than about 40.0 nm, or no greater than about 35.0 nm, or no greater than about 30.0 nm, or no greater than about 25.0 nm, or no greater than about 20.0 nm. The alkaline earth metal carbonate, for example, calcium carbonate (e.g., PCC), or porous calcium carbonate (e.g., porous PCC), may have an average (BJH) pore size of from about 1.0 nm to about 100.0 nm, for example, from about 2.0 nm to about 50.0 nm, or from about 3.0 nm to about 40.0 nm, or from about 4.0 nm to about 40.0 nm, or from about 5.0 nm to about 35.0 nm, or from about 1.0 nm to about 30.0 nm, or from about 1.0 nm to about 25.0 nm, or from about 3.0 nm to about 25.0 nm, or from about 5.0 nm to about 20.0 nm, or from about 5.0 nm to about 100.0 nm, or from about 5.0 nm to about 50.0 nm, or from about 5.0 nm to about 40.0 nm, or from about 8.0 nm to about 40.0 nm, or from about 10.0 nm to about 35.0 nm.

The alkaline earth metal carbonate, for example, calcium carbonate (e.g., PCC), or porous calcium carbonate (e.g., porous PCC), may have an average pore volume of no less than about 0.001 $cm^3/g$, for example, no less than about 0.005 $cm^3/g$, or no less than about 0.01 $cm^3/g$, or no less than about 0.02 $cm^3/g$, or no less than about 0.03 $cm^3/g$, or no less than about 0.04 $cm^3/g$, or no less than about 0.05 $cm^3/g$, or no less than about 0.06 $cm^3/g$, or no less than about 0.07 $cm^3/g$, or no less than about 0.08 $cm^3/g$, or no less than about 0.09 $cm^3/g$, or no less than about 0.1 $cm^3/g$. The alkaline earth metal carbonate, for example, calcium carbonate (e.g., PCC), or porous calcium carbonate (e.g., porous PCC), may have an average pore volume of no greater than about 1 $cm^3/g$, for example, no greater than about 0.9 $cm^3/g$, or no greater than about 0.8 $cm^3/g$, or no greater than about 0.7 $cm^3/g$, or no greater than about 0.6 $cm^3/g$, or no greater than about 0.5 $cm^3/g$, or no greater than about 0.4 $cm^3/g$, or no greater than about 0.3 $cm^3/g$, or no greater than about 0.2 $cm^3/g$, or no greater than about 0.1 $cm^3/g$. The alkaline earth metal carbonate, for example, calcium carbonate (e.g., PCC), or porous calcium carbonate (e.g., porous PCC), may have an average pore volume of from about 0.001 $cm^3/g$ to about 1 $cm^3/g$, for example from about 0.005 $cm^3/g$ to about 0.5 $cm^3/g$, or from about 0.01 $cm^3/g$ to about 0.5 $cm^3/g$, or from about 0.01 $cm^3/g$ to about 0.4 $cm^3/g$, or from about 0.02 $cm^3/g$ to about 0.4 $cm^3/g$, or from about 0.04 $cm^3/g$ to about 0.4 $cm^3/g$, or from about 0.05 $cm^3/g$ to about 0.3 $cm^3/g$, or from about 0.1 $cm^3/g$ to about 0.2 $cm^3/g$.

The alkaline metal carbonate, for example, calcium carbonate (e.g., PCC) may optionally further comprise one or more crystallization controller(s). The crystallization controller may, for example, be selected from the group consisting of polyacrylic acid, salts thereof and mixtures thereof, citric acid, sodium dioctylsulfosuccinate, polyaspartic acid and Ethylenediaminetetraacetic acid (EDTA). Polyacrylic acid, salts thereof and mixtures thereof, and Ethylenediaminetetraacetic acid (EDTA) are the most preferred crystallization controllers.

The crystallization controller may, for example, be present in the alkaline metal carbonate, for example, calcium carbonate (e.g., PCC) in an amount equal to or greater than about 0.1 wt. % (by weight of calcium carbonate). For example, the crystallization controller may be present in the alkaline metal carbonate, for example, calcium carbonate (e.g., PCC) in an amount equal to or greater than about 0.2 wt.% or equal to or greater than about 0.25 wt. % or equal to or greater than about 0.5 wt.%. For example, the crystallization controller may be present in the alkaline metal carbonate, for example, calcium carbonate (e.g., PCC) in an amount equal to or less than about 4 wt. % or equal to or less than about 3 wt. % or equal to or less than about 2.5 wt. % or equal to or less than about 2 wt. % or equal to or less than about 1 wt. %.

When polyacrylic acid, salts thereof and mixtures thereof are present in the alkaline metal carbonate, for example, calcium carbonate (e.g., PCC) particles, generally the molecular weight of the polyacrylic acid or its salt, in particular sodium salt, is from about 500 and up to about 15,000 g/mol. The molecular weight may, for example, be equal to or larger than about 500 g/mol or equal to or larger than about 700 g/mol or equal to or larger than about 1000 g/mol. Generally the molecular weight is equal to or less than about 15,000 g/mol, or equal to or less than about 10,000 g/mol or equal to or less than about 5000 g/mol. For example, the molecular weights may be from about 1000 to about 3500 g/mol. If the polyacrylic acid is present as salt, such as the sodium salt, the degree of acid neutralization by its cation, in particular sodium, can be from 0 to 100 %. For instance, around 70 % of the acid groups may be neutralized. The crystallization controlled may thus have a pH ranging from about 5 to about 6. For instance around 100 % of the acid groups may be neutralized and the crystallization controller may have a pH ranging from about 6.5 to about 10.

*Mineral filler*

The mineral filler may further comprise one or more minerals other than an alkaline earth metal carbonate having a BET specific surface area of at least 40 $m^2/g$, for example, at least 50 $m^2/g$, or at least 60 $m^2/g$, or at least 70 $m^2/g$.

For example, the mineral filler may further comprise one or more alkaline earth metal carbonates having a BET specific surface area which is less than that of the alkaline earth metal carbonate used in accordance with the various aspects described herein, for example, one or more alkaline earth metal carbonates having a BET specific surface area of less than 40 $m^2/g$, for example, less than 50 $m^2/g$, or less than 60 $m^2/g$, or less than 70 $m^2/g$. The mineral filler may comprise calcium carbonate having a BET specific surface area of less than 40 $m^2/g$, for example, less than 50 $m^2/g$, or less than 60 $m^2/g$, or less than 70 $m^2/g$.

The mineral filler may comprise (e.g. in addition to the alkaline earth metal carbonate according to the various aspects described herein, for example, calcium carbonate (e.g. PCC) having a BET specific surface area of at least 40 $m^2/g$, for example, at least 50 $m^2/g$, or at least 60 $m^2/g$, or at least 70 $m^2/g$) one or more of the following: ground calcium carbonate (GCC), wollastonite, perlite, dolomite, mica, talc (e.g., a chlorite-containing talc), diatomaceous earth, kaolin (for example, calcined kaolin or hydrous kaolin).

In certain embodiments, the mineral filler comprises GCC in addition to the alkaline earth metal carbonate according to the various aspects described herein.

The GCC may have a $d_{50}$ (by sedigraph) from about 0.1 $\mu$m to about 20.0 $\mu$m, for example, from about 0.5 $\mu$m to about 10.0 $\mu$m, or from about 1.0 $\mu$m to about 5.0 $\mu$m, or from about 2.0 $\mu$m to about 3.0 $\mu$m. The GCC may have a $d_{50}$ (by sedigraph) of about 2.4 $\mu$m.

The GCC may have a residue on sieve (at 38 $\mu$m) less than or equal to about 0.100 %, for example, less than or equal to about 0.050 %, or less than or equal to about 0.025 %, or less than or equal to about 0.015 %. The GCC may have a residue on sieve (at 38 $\mu$m) greater than or equal to about 0.001 %. The GCC may have a residue on sieve (at 38 $\mu$m) from about 0.001 % to about 0.100 %, for example, from about 0.001 % to about 0.015 %.

The mineral filler may comprise no less than about 30 wt. %, for example, no less than about 40 wt. %, or no less than about 50 wt. %, or no less than about 60 wt. %, or no less than about 70 wt. %, or no less than about 80 wt. %, or no less than about 90 wt. %, or no less than about 95 wt. %, of GCC, based on the total weight of the mineral filler. The mineral filler may comprise no more than about 99 wt. %, for example, no more than about 98 wt. %, or no more than about 97 wt. %, of GCC, based on the total weight of the mineral filler. The mineral filler may comprise from about 30 wt. % to about 99 wt. %, for example, from about 50 wt. % to about 99 wt. %, or from about 70 wt. %, to about 99 wt. %, or from about 80 wt. % to about 99 wt. %, or from about 90 wt. % to about 99 wt. %, or from about 95 wt. % to about 99 wt. %, or from about 95 wt. % to about 98 wt. %, or from about 95 wt. % to about 97 wt. %, of GCC, based on the total weight of the mineral filler.

The mineral filler may comprise from about 90 wt. % to about 99 wt. %, for example, from about 95 wt. % to about 97 wt. %, of GCC having a $d_{50}$ (by sedigraph) from about 1.0 $\mu$m to about 5.0 $\mu$m, for example, from about 2.0 $\mu$m to about 3.0 $\mu$m.

The mineral filler may comprise alkaline earth metal carbonate, for example, calcium carbonate (e.g. PCC), having a BET specific surface area of at least 40 $m^2/g$, for example, at least 50 $m^2/g$, or at least 60 $m^2/g$, or at least 70 $m^2/g$, and GCC in a ratio (by weight) of from about 1:50 to about 1:15, for example, from about 1:30 to about 1:20.

The mineral filler may comprise alkaline earth metal carbonate, for example, calcium carbonate (e.g. PCC), having a BET specific surface area of at least 40 $m^2/g$, for example, at least 50 $m^2/g$, or at least 60 $m^2/g$, or at least 70 $m^2/g$, and GCC in a ratio (by weight) of about 1:25.

The mineral filler may comprise PCC having a $d_{50}$ (by laser) from about 1.0 $\mu$m to about 5.0 $\mu$m, for example, from about 2.0 $\mu$m to about 4.0 $\mu$m, and GCC having a $d_{50}$ (by sedigraph) from about 1.0 $\mu$m to about 5.0 $\mu$m, for

example, from about 2.0 μm to about 3.0 μm, in a ratio (by weight) of from about 1:50 to about 1:15, for example, from about 1:30 to about 1:20. The mineral filler may comprise PCC having a $d_{50}$ (by laser) from about 1.0 μm to about 5.0 μm, for example, from about 2.0 μm to about 4.0 μm, and GCC having a $d_{50}$ (by sedigraph) from about 1.0 μm to about 5.0 μm, for example, from about 2.0 μm to about 3.0 μm, in a ratio (by weight) of about 1:25.

The mineral filler may comprise PCC having a $d_{50}$ (by laser) from about 6.0 μm to about 10.0 μm, for example, from about 7.0 μm to about 8.0 μm, and GCC having a $d_{50}$ (by sedigraph) from about 1.0 μm to about 5.0 μm, for example, from about 2.0 μm to about 3.0 μm, in a ratio (by weight) of from about 1:50 to about 1:15, for example, from about 1:30 to about 1:20. The mineral filler may comprise PCC having a $d_{50}$ (by laser) from about 160 μm to about 10.0 μm, for example, from about 7.0 μm to about 8.0 μm, and GCC having a $d_{50}$ (by sedigraph) from about 1.0 μm to about 5.0 μm, for example, from about 2.0 μm to about 3.0 μm, in a ratio (by weight) of about 1:25.

The mineral filler may consist predominantly of the alkaline earth metal carbonate having a BET specific surface area of at least 40 m$^2$/g, for example, at least 50 m$^2$/g, or at least 60 m$^2$/g, or at least 70 m$^2$/g. The mineral filler may consist predominantly of calcium carbonate (e.g., PCC) having a BET specific surface area of at least 40 m$^2$/g, for example, at least 50 m$^2$/g, or at least 60 m$^2$/g, or at least 70 m$^2$/g. The mineral filler may consist predominantly of porous calcium carbonate (e.g., porous PCC) having a BET specific surface area of at least 40 m$^2$/g, for example, at least 50 m$^2$/g, or at least 60 m$^2$/g, or at least 70 m$^2$/g.

The mineral filler may comprise no less than about 0.5 wt. %, for example, or no less than about 1.0 wt. %, or no less than about 2.0 wt. %, or no less than about 3.0 wt. %, or no less than about 3.5 wt. %, or less than about 5.0 wt. %, or no less than about 10 wt. %, or no less than about 15 wt. %, of the alkaline earth metal carbonate (for example, calcium carbonate (e.g., PCC)) having a BET specific surface area of at least 40 m$^2$/g, for example, at least 50 m$^2$/g, or at least 60 m$^2$/g, or at least 70 m$^2$/g, based on the total weight of the mineral filler. The mineral filler may comprise no greater than about 95 wt. %, for example, no greater than about 90 wt. %, or no greater than about 85 wt. %, or no greater than about 80 wt. %, or no greater than about 75 wt. %, or no greater than about 70 wt. %, or no greater than about 65 wt. %, or no greater than about 60 wt. %, or no greater than about 55 wt. %, or no greater than about 50 wt. %, for example, or no greater than about 40 wt. %, or no greater than about 30 wt. %, or no greater than about 20 wt. %, or no greater than about 15 wt. %, or no greater than about 10 wt. %, or no greater than about 5.0 wt. %, or no greater than about 4.0 wt. %, of the alkaline earth metal carbonate (for example, calcium carbonate (e.g., PCC)) having a BET specific surface area of at least 40 m$^2$/g, for example, at least 50 m$^2$/g, or at least 60 m$^2$/g, or at least 70 m$^2$/g, based on the total weight of the mineral filler. The mineral filler may comprise from about 0.5 wt. % to about 90 wt. %, for example, 0.5 wt. % to about 50 wt. %, from about 0.5 wt. % to about 40 wt. %, or from about 0.5 wt. % to about 30 wt. %, or from about 0.5 wt. % to about 20 wt. %, or from about 0.5 wt. % to about 15 wt. %, or from about 0.5 wt. % to about 10 wt. %, or from about 0.5 wt. % to about 5.0 wt. %, or from about 1.0 wt. % to about 5.0 wt. %, or from about 2.0 wt. % to about 5.0 wt. %, or from about 3.0 wt. % to about 4.0 wt. %, or from about 3.5 wt. % to about 3.0 wt. %, of the alkaline earth metal carbonate (for example, calcium carbonate (e.g., PCC)) having a BET specific surface area of at least 40 m$^2$/g, for example, at least 50 m$^2$/g, or at least 60 m$^2$/g, or at least 70 m$^2$/g, based on the total weight of the mineral filler.

In certain embodiments, the mineral filler may comprise about 100 wt. % of the alkaline earth metal carbonate (for example, calcium carbonate (e.g., PCC)) having a BET specific surface area of at least 40 m$^2$/g, for example, at least 50 m$^2$/g, or at least 60 m$^2$/g, or at least 70 m$^2$/g, based on the total weight of the mineral filler.

In certain embodiments, the mineral filler may comprise no less than about 1 wt. %, for example, no less than about 5 wt. %, or no less than about 10 wt. %, or no less than about 20 wt. %, or no less than about 30 wt. %, or no less than about 40 wt. %, or no less than about 50 wt. %, or no less than about 60 wt. %, or no less than about 70 wt. %, or no less than about 80 wt. %, or no less than about 90 wt. %, of alkaline earth metal carbonate (for example, calcium carbonate, including, e.g., GCC and/or PCC). The mineral filler may comprise no greater than about 100 wt. %, for example, no greater than about 99 wt. %, or no greater than about 98 wt. %, or no greater than about 97 wt. %, or no greater than about 95 wt. %, or no greater than about 90 wt. %, or no greater than about 85 wt. %, or no greater than about 80 wt. %, or no greater than about 70 wt. %, or no greater than about 60 wt. %, or no greater than about 50 wt. %, of alkaline earth metal carbonate (for example, calcium carbonate, including, e.g., GCC and/or PCC). The mineral filler may comprise from about 1 wt. % to about 99 wt. %, for example, from about 5 wt. % to about 95 wt. %, or from about 10 wt. % to about 80 wt. %, or from about 20 wt. % to about 80 wt. %, or from about 30 wt. % to about 70 wt. %, or from about 40 wt. % to about 60 wt. %, or from about 30 wt. % to about 99 wt. %, or from about 40 wt. % to about 99 wt. %, or from about 50 wt. % to about 99 wt. %, or from about 60 wt. % to about 99 wt. %, or from about 70 wt. % to about 99 wt. %, or from about 80 wt. % to about 99 wt. %, or from about 90 wt. % to about 99 wt. %, or from about 95 wt. % to about 99 wt. %, or from about 50 wt. % to about 100 wt. %, or from about 60 wt. % to about 100 wt. %, or from about 70 wt. % to about 100 wt. %, or from about 80 wt. % to about 100 wt. %, or from about 90 wt. % to about 100 wt. %, or from about 95 wt. % to about 100 wt. %, or from about 98 wt. % to about 100 wt. %, or from about 99 wt. % to about 100 wt. %, of alkaline earth metal carbonate (for example, calcium carbonate, including, e.g., GCC and/or PCC). In certain embodiments, the mineral filler may comprise about 100 wt. % of alkaline earth metal carbonate (for example, calcium carbonate, including, e.g., GCC and/or PCC).

*Polymer composition*

The polymer composition comprises polymer. The polymer composition may comprise a single polymer type. Alternatively, the polymer composition may comprise more than one polymer type. The polymer composition may comprise two or more, for example, three or more, or four or more, or five or more polymers. The polymer composition may comprise a blend of polymers. The polymer composition may comprise one or more copolymers. The polymer composition may comprise one or more block copolymers.

The polymer composition may comprise one or more thermoplastic polymers. The polymer may comprise one or more elastomeric polymers. The polymer composition may comprise one or more thermosetting polymers. The one or more polymers may form a polymer matrix. The other components of the polymer composition (e.g. the mineral filler) are typically dispersed in the said polymer matrix.

The polymer composition may comprise one or more polymers susceptible to dehydrohalogenation. The term "dehydrohalogenation" refers to the release of hydrogen halides on decomposition of the polymer composition. The polymer composition may comprise one or more polymers susceptible to dehydrohalogenation on heating, for example, on heating above a critical temperature. The polymer composition may comprise one or more polymers susceptible to thermal dehydrohalogenation. The polymer composition may comprise one or more polymers susceptible to dehydrohalogenation on combustion of said polymer composition (i.e. combustive dehydrohalogenation).

The presence of the alkaline earth metal carbonate (for example, calcium carbonate (e.g. PCC)) in the polymer composition may reduce the susceptibility of the polymer composition to dehydrohalogenation. The presence of the alkaline earth metal carbonate (for example, calcium carbonate (e.g. PCC)) in the polymer composition may reduce the release of hydrogen halides on decomposition of the polymer composition. The alkaline earth metal carbonate (for example, calcium carbonate (e.g. PCC)) in the polymer composition may absorb hydrogen halides released on decomposition of the polymer composition. The alkaline earth metal carbonate (for example, calcium carbonate (e.g. PCC)) in the polymer composition may reduce the amount of hydrogen halides released on combustion of the polymer composition.

The polymer composition may comprise one or more polymers susceptible to dehydrochlorination. The term "dehydrochlorination" refers to the release of hydrogen chloride (HCl) on decomposition of the polymer composition. The polymer composition may comprise one or more polymers susceptible to dehydrochlorination on heating, for example, on heating above a critical temperature. The polymer composition may comprise one or more polymers susceptible to thermal dehydrochlorination. The polymer composition may comprise one or more polymers susceptible to dehydrochlorination on combustion of said polymer composition (i.e. combustive dehydrochlorination).

The presence of the alkaline earth metal carbonate (for example, calcium carbonate (e.g. PCC)) in the polymer composition may reduce the susceptibility of the polymer composition to dehydrochlorination. The presence of the alkaline earth metal carbonate (for example, calcium carbonate (e.g. PCC)) in the polymer composition may reduce the release of hydrogen chloride (HCl) on decomposition of the polymer composition. The alkaline earth metal carbonate (for example, calcium carbonate (e.g. PCC)) in the polymer composition may absorb hydrogen chloride (HCl) released on decomposition of the polymer composition. The alkaline earth metal carbonate (for example, calcium carbonate (e.g. PCC)) in the polymer composition may reduce the amount of hydrogen chloride (HCl) released on combustion of the polymer composition.

Without wishing to be bound by theory, calcium carbonate present in the mineral filler may reduce the release of hydrogen chloride on degradation of the polymer composition by reacting with the hydrogen chloride to form calcium chloride, carbon dioxide and water, according to the following equation:

$$CaCO_3 + 2HCl \rightarrow CaCl_2 + CO_2 + H_2O$$

The polymer composition may comprise one or more halogen-containing polymers. The polymer composition may comprise one or more halogen-containing copolymers. The polymer composition may comprise one or more halogenated polymers.

The polymer composition may comprise one or more chlorine-containing polymers. The polymer composition may comprise one or more chlorine-containing copolymers. The polymer composition may comprise one or more chlorinated polymers.

The polymer composition may comprise polyvinyl chloride (PVC). The polymer composition may comprise chlorinated polyvinyl chloride (CPVC). The polymer composition may comprise one or more homopolymers and/or one or more copolymers of vinyl chloride monomers.

The polymer composition may comprise one or more non-chlorine-containing polymers.

The polymer composition may comprise one or more polymers which degrades in the presence of, for example, on exposure to, a hydrogen halide. The polymer composition may comprise one or more polymers whose appearance deteriorates in the presence of, for example, on exposure to, a hydrogen halide. The polymer composition may comprise one or more polymers which discolours in the presence of, for example, on exposure to, a hydrogen halide.

The presence of the alkaline earth metal carbonate (for example, calcium carbonate (e.g. PCC)) in the polymer composition may reduce the susceptibility of the polymer composition to degradation, for example, visible deterioration, or discolouration, for example on exposure to a hydrogen halide.

The polymer composition may comprise one or more polymers which degrades in the presence of, for example, on exposure to, hydrogen chloride. The polymer composition may comprise one or more polymers whose appearance deteriorates in the presence of, for example, on exposure to, hydrogen chloride. The polymer composition may comprise one or more polymers which discolours in the presence of, for example, on exposure to, hydrogen chloride.

The presence of the alkaline earth metal carbonate (for example, calcium carbonate (e.g. PCC)) in the polymer composition may reduce the susceptibility of the polymer composition to degradation, for example, visible deterioration, or discolouration, for example on exposure to hydrogen chloride.

The polymer composition may comprise one or more polymers which degrades in the presence of, for example, on exposure to, acid. The polymer composition may comprise one or more polymers whose appearance deteriorates in the presence of, for example, on exposure to, acid. The polymer composition may comprise one or more polymers which discolours in the presence of, for example, on exposure to, acid.

The presence of the alkaline earth metal carbonate (for example, calcium carbonate (e.g. PCC)) in the polymer composition may reduce the susceptibility of the polymer composition to degradation, for example, visible deterioration, or discolouration, for example on exposure to acid.

The polymer composition may comprise one or more of the following: polyalkylene (e.g. polyethylene, polypropylene or polybutylene), polyoxymethylene (also known as polyacetal and polyformaldehyde), polyvinyl ester (general formula -[RCOOCHCH$_2$]-), acrylic polymers, epoxy polymers, polystyrene, polyvinyl acetate, polyvinyl alcohol, polyacrylonitrile, acrylonitrile butadiene styrene, polyamide, polylactic acid, polybenzimidazole, polybenzoxazole, polybenzthiazole, polycarbonate, polyether sulfone, polyetherether ketone, polyimide, polyetherimide, polyphenylene sulfide, polytetrafluoroethylene, polyvinyl acetate (e.g. ethylene vinyl acetate or poly(meth methacrylate)), or a combination of one or more thereof.

The polymer composition may comprise synthetic rubber (e.g., any artificial elastomer). For example, the polymer composition may comprise one or more of isoprene, chloroprene and isobutylene. For example, the polymer composition may comprise one or more of the following: styrene-butadiene rubber (SBR), polyacrylate rubber, ethylene vinyl acetate copolymer, polyvinyl chloride, ethylene acrylate rubber, polyester urethane, bromo isobutylene isoprene, polybutadiene, chloro isobutylene isoprene, polychloroprene, chlorosulphonated polyethylene, epichlorohydrin, ethylene propylene, ethylene propylene diene monomer rubber (EPDM), polyether urethane, perflurocarbon rubber, fluorinated hydrocarbon, fluoro silicone, fluorocarbon rubber, hydrogenated nitrile butadiene, polyisoprepne, isobutylene isoprene butyl, acrylonitrile butadiene, polyurethane, styrene ethylene butylene styrene copolymer, polysiloxane, vinyl methyl silicone, acrylonitrile butadiene carboxy monomer, styrene butadiene carboxy monomer, thermoplastic polyether-ester, styrene butadiene block copolymer, styrene butadiene carboxy block copolymer, or a combination of one or more thereof. In certain embodiments, the polymer composition comprises EPDM, ethylene vinyl acetate copolymer, polyvinyl chloride or a combination of one or more thereof.

The polymer composition may comprise one or more additives. For example, the polymer composition may comprise one or more of the following: coupling agents (e.g. maleic anhydride grafted polyolefins), compatibilizers (e.g. maleic anhydride grafted polyolefins), opacifying agents, pigments, colorants, slip agents (for example Erucamide), antioxidants, anti-fog agents, anti-static agents, anti-block agents, moisture barrier additives, gas barrier additives, biocides, fungicides, dispersants, hydrocarbon waxes, stabilizers (e.g. calcium-zinc based polymer stabilizers), co-stabilizers, lubricants, agents to improve tenacity, agents to improve heat-and-form stability, agents to improve processing performance, process aids (for example Polybatch® AMF-705), mould release agents (e.g. fatty acids, zinc, calcium, magnesium, lithium salts of fatty acids, organic phosphate esters, stearic acid, zinc stearate, calcium stearate, magnesium stearate, lithium stearate, calcium oleate, zinc palmiate), and plasticizers.

Each of the additives may independently be present in the polymer composition in an amount ranging from about 0 % to about 2 % based on the total weight of the composition. For example, each of the additives may be present in the polymer composition in an amount ranging from about 0 % to about 1.5 % or from about 0 % to about 1 % or from about 0 % to about 0.5 %. The total weight of the additives in the polymer composition may, for example, be no more than about 10 wt. % or no more than about 5 wt. % or no more than about 4 wt. % or no more than about 3 wt. % or no more than about 2 wt. % based on the total weight of the polymer composition.

The polymer composition may comprise one or more fire retardants. For example, the polymer composition may comprise alumina trihydrate and/or magnesium hydroxide.

The alkaline earth metal carbonate (for example, calcium carbonate (e.g. PCC)) may function as a degradation retardant in the polymer composition. The alkaline earth metal carbonate (for example, calcium carbonate (e.g. PCC)) may function as a thermal degradation retardant in the polymer composition. The alkaline earth metal carbonate (for example, calcium carbonate (e.g. PCC)) may function as a thermal stabiliser in the polymer composition. The alkaline earth metal carbonate (for example, calcium carbonate (e.g. PCC)) may function as an acid-scavenging stabiliser, for example, an HCl-scavenging stabiliser, in the polymer composition.

The polymer composition may comprise no less than about 10.0 wt. %, for example, no less than about 15.0 wt. %, or no less than about 20.0 wt. %, or no less than about 25.0 wt. %, or no less than about 30.0 wt. %, or no less than about 35.0 wt. %, or no less than about 40.0 wt. %, or no less than about 45.0 wt. %, or no less than about 50.0 wt. %, or no less than about 55.0 wt. %, or no less than about 60.0 wt. %, or no less than about 65.0 wt. %, or no less than about 70.0 wt. %, or no less than about 75.0 wt. %, or no less than about 80.0 wt. %, or no less than about 85.0 wt. %, or no less than about 90.0 wt. %, of polymer, based on the total weight of the polymer composition. The polymer composition may comprise no greater than about 95.0 wt. %, for example, no greater than about 90.0 wt. %, or no greater than about 85.0 wt. %, or no greater than about 80.0 wt. %, or no greater than about 75.0 wt. %, or no greater than about 70.0 wt. %, or no greater than about 65.0 wt. %, or no greater than about 60.0 wt. %, or no greater than about 55.0 wt. %, or no greater than about 50.0 wt. %, or no greater than about 45.0 wt. %, or no greater than about 40.0 wt. %, or no greater than about 35.0 wt. %, or no greater than about 30.0 wt. %, of polymer, based on the total weight of the polymer composition. The polymer composition may comprise from about 5.0 wt. % to about 95.0 wt. %, for example, from about 10.0 wt. % to about 95.0 wt. %, or from about 10.0 wt. % to about 90.0 wt. %, or from about 10.0 wt. % to about 80.0 wt. %, or from about 20.0 wt. % to about 80 wt. %, or from about 30.0 wt. % to about 80.0 wt. %, or from about 30.0 wt. % to about 70.0 wt. %, or from about 40.0 wt. % to about 80.0 wt. %, or from about 40.0 w.t % to about 80.0 wt. %, or from about 50.0 wt. % to about 80.0 wt. %, or from about 50.0 wt. % to about 70.0 wt. %, or from about 40.0 wt. % to about 95.0 wt. %, or from about 40.0 wt. % to about 90.0 wt. %, or from about 50.0 wt. % to about 95.0 wt. %, or from about 50.0 wt. % to about 90.0 wt. %, of polymer, based on the total weight of the polymer composition.

The polymer composition may comprise no less than about 5.0 wt. %, for example, no less than about 10.0 wt. %, or no less than about 15.0 wt. %, or no less than about 20.0 wt. %, of the mineral filler, based on the total weight of the polymer composition. The polymer composition may comprise no greater than about 80 wt. %, for example, no greater than about 70 wt. %, or no greater than about 60 wt. %, or no greater than about 50 wt. %, or no greater than about 40 wt. %, or no greater than about 30 wt. %, or no greater than about 20 wt. %, of the mineral filler, based on the total weight of the polymer composition. The polymer composition may comprise from about 5.0 wt. % to about 80.0 wt. %, for example, from about 5.0 wt. %, to about 60.0 wt. %, or from about 5.0 wt. % to about 50.0 wt. %, or from about 5.0 wt. % to about 40.0 wt. %, or from about 5.0 wt. % to about 30.0 wt. %, or from about 10.0 wt. % to about 80.0 wt. %, or from about 10.0 wt. % to about 60.0 wt. %, or from about 10.0 wt. % to about 50.0 wt. %, or from about 10.0 wt. % to about 40.0 wt. %, or from about 10.0 wt. % to about 30.0 wt. %, or from about 15.0 wt. % to about 80.0 wt. %, or from about 15.0 wt. % to about 60 wt. %, or from about 15.0 wt. % to about 50.0 wt. %, or from about 20.0 wt. % to about 80.0 wt. %, or from about 20.0 wt. % to about 50.0 wt. %, or from about 20.0 wt. % to about 40 wt. %, or from about 20.0 wt. % to about 30 wt. %, of mineral filler, based on the total weight of the polymer composition.

For example, the polymer composition may comprise, based on the total weight of the polymer composition: from about 5.0 wt. % to about 95.0 wt. %, for example, from about 10.0 wt. % to about 95.0 wt. %, or from about 10.0 wt. % to about 90.0 wt. %, or from about 10.0 wt. % to about 80.0 wt. %, or from about 20.0 wt. % to about 80 wt. %, or from about 30.0 wt. % to about 80.0 wt. %, or from about 30.0 wt. % to about 70.0 wt. %, or from about 40.0 wt. % to about 80.0 wt. %, or from about 40.0 w.t % to about 80.0 wt. %, or from about 50.0 wt. % to about 80.0 wt. %, or from about 50.0 wt. % to about 70.0 wt. %, or from about 40.0 wt. % to about 95.0 wt. %, or from about 40.0 wt. % to about 90.0 wt. %, or from about 50.0 wt. % to about 95.0 wt. %, or from about 50.0 wt. % to about 90.0 wt. %, of polymer; and from about 5.0 wt. % to about 80 wt. %, for example, from about 5.0 wt. %, to about 60 wt. %, or from about 5.0 wt. % to about 50 wt. %, or from about 5.0 wt. % to about 40.0 wt. %, or from about 5.0 wt. % to about 30.0 wt. %, or from about 10.0 wt. % to about 80.0 wt. %, or from about 10.0 wt. % to about 60.0 wt. %, or from about 10.0 wt. % to about 50.0 wt. %, or from about 10.0 wt. % to about 40.0 wt. %, or from about 10.0 wt. % to about 30.0 wt. %, or from about 15.0 wt. % to about 80.0 wt. %, or from about 15.0 wt. % to about 60 wt. %, or from about 15.0 wt. % to about 50.0 wt. %, or from about 20.0 wt. % to about 80.0 wt. %, or from about 20.0 wt. % to about 50.0 wt. %, or from about 20.0 wt. % to about 40 wt. %, or from about 20.0 wt. % to about 30 wt. %, of mineral filler.

The polymer composition may comprise no less than about 0.05 wt. %, for example, no less than about 0.1 wt. %, no less than about 0.2 wt. %, or no less than about 0.3 wt. %, or no less than about 0.4 wt. %, or no less than about 0.5 wt. %, or no less than about 0.6 wt. %, or no less than about 0.7 wt. %, or no less than about 0.8 wt. %, or no less than about 0.9 wt. %, or no less than about 1.0 wt. %, or no less than about 2.0 wt. %, or no less than about 3.0 wt. %, or no less than about 4.0 wt. %, or no less than about 5.0 wt. %, of alkaline earth metal carbonate, for example, calcium carbonate (e.g., PCC) having a BET specific surface area of at least 40 $m^2/g$, for example, at least 50 $m^2/g$, or at least 60 $m^2/g$, or at least 70 $m^2/g$, based on the total weight of the polymer composition. The polymer composition may comprise no more than about 50.0 wt. %, for example, no more than about 40.0 wt. %, or no more than about 30.0 wt. %, or no more than about 20.0 wt. %, or no more than about 10.0 wt. %, or no more than about 5.0 wt. %, or no more than about 4.0 wt. %, or no more than about 3.0 wt. %, or no more than about 2.0 wt. %, or no more than about 1.0 wt.

%, of alkaline earth metal carbonate, for example, calcium carbonate (e.g., PCC) having a BET specific surface area of at least 40 m$^2$/g, for example, at least 50 m$^2$/g, or at least 60 m$^2$/g, or at least 70 m$^2$/g, based on the total weight of the polymer composition. The polymer composition may comprise from about 0.05 wt. % to about 50.0 wt. %, for example, from about 0.05 wt. % to about 20.0 wt. %, or from about 0.05 wt. % to about 10.0 wt. %, or from about 0.05 wt. % to about 5.0 wt. %, or from about 0.05 wt. % to about 2.0 wt. %, or from about 0.05 wt. % to about 1.0 wt. %, or from about 0.1 wt. % to about 50.0 wt. %, or from about 0.1 wt. % to about 20.0 wt. %, or from about 0.1 wt. % to about 10.0 wt. %, or from about 0.1 wt. % to about 5.0 wt. %, or from about 0.1 wt. % to about 2.0 wt. %, or from about 0.1 wt. % to about 1.0 wt. %, or from about 0.5 wt. % to about 10.0 wt. %, or from about 0.5 wt. % to about 5.0 wt. %, or from about 0.5 wt. % to about 3.0 wt. %, or from about 0.5 wt. % to about 2.0 wt. %, or from about 0.5 wt. % to about 1.0 wt. %, of alkaline earth metal carbonate, for example, calcium carbonate (e.g., PCC) having a BET specific surface area of at least 40 m$^2$/g, for example, at least 50 m$^2$/g, or at least 60 m$^2$/g, or at least 70 m$^2$/g, based on the total weight of the polymer composition.

For example, the polymer composition may comprise, based on the total weight of the polymer composition: from about 5.0 wt. % to about 95.0 wt. %, for example, from about 10.0 wt. % to about 95.0 wt. %, or from about 10.0 wt. % to about 90.0 wt. %, or from about 10.0 wt. % to about 80.0 wt. %, or from about 20.0 wt. % to about 80 wt. %, or from about 30.0 wt. % to about 80.0 wt. %, or from about 30.0 wt. % to about 70.0 wt. %, or from about 40.0 wt. % to about 80.0 wt. %, or from about 40.0 w.t % to about 80.0 wt. %, or from about 50.0 wt. % to about 80.0 wt. %, or from about 50.0 wt. % to about 70.0 wt. %, or from about 40.0 wt. % to about 95.0 wt. %, or from about 40.0 wt. % to about 90.0 wt. %, or from about 50.0 wt. % to about 95.0 wt. %, or from about 50.0 wt. % to about 90.0 wt. %, of polymer; and from about 0.05 wt. % to about 50.0 wt. %, for example, from about 0.05 wt. % to about 20.0 wt. %, or from about 0.05 wt. % to about 10.0 wt. %, or from about 0.05 wt. % to about 5.0 wt. %, or from about 0.05 wt. % to about 2.0 wt. %, or from about 0.05 wt. % to about 1.0 wt. %, or from about 0.1 wt. % to about 50.0 wt. %, or from about 0.1 wt. % to about 20.0 wt. %, or from about 0.1 wt. % to about 10.0 wt. %, or from about 0.1 wt. % to about 5.0 wt. %, or from about 0.1 wt. % to about 2.0 wt. %, or from about 0.1 wt. % to about 1.0 wt. %, or from about 0.5 wt. % to about 10.0 wt. %, or from about 0.5 wt. % to about 5.0 wt. %, or from about 0.5 wt. % to about 3.0 wt. %, or from about 0.5 wt. % to about 2.0 wt. %, or from about 0.5 wt. % to about 1.0 wt. %, of alkaline earth metal carbonate, for example, calcium carbonate (e.g., PCC), having a BET specific surface area of at least 40 m$^2$/g, for example, at least 50 m$^2$/g, or at least 60 m$^2$/g, or at least 70 m$^2$/g.

The polymer composition may comprise, based on the total weight of the polymer composition, from about 0.05 wt. % to about 50.0 wt. %, for example, from about 0.05 wt. % to about 20.0 wt. %, or from about 0.05 wt. % to about 10.0 wt. %, or from about 0.05 wt. % to about 5.0 wt. %, or from about 0.05 wt. % to about 2.0 wt. %, or from about 0.05 wt. % to about 1.0 wt. %, or from about 0.1 wt. % to about 50.0 wt. %, or from about 0.1 wt. % to about 20.0 wt. %, or from about 0.1 wt. % to about 10.0 wt. %, or from about 0.1 wt. % to about 5.0 wt. %, or from about 0.1 wt. % to about 2.0 wt. %, or from about 0.1 wt. % to about 1.0 wt. %, or from about 0.5 wt. % to about 10.0 wt. %, or from about 0.5 wt. % to about 5.0 wt. %, or from about 0.5 wt. % to about 3.0 wt. %, or from about 0.5 wt. % to about 2.0 wt. %, or from about 0.5 wt. % to about 1.0 wt. %, of alkaline earth metal carbonate, for example, calcium carbonate (e.g., PCC) having a BET specific surface area of at least 40 m$^2$/g, for example, at least 50 m$^2$/g, or at least 60 m$^2$/g, or at least 70 m$^2$/g, and having a d$_{50}$ of from about 0.1 $\mu$m to about 50.0 $\mu$m, for example, from about 0.1 $\mu$m to about 40.0 $\mu$m, or from about 0.1 $\mu$m to about 30.0 $\mu$m, or from about 0.1 $\mu$m to about 20.0 $\mu$m, or from about 0.1 $\mu$m to about 15.0 $\mu$m, or from about 0.1 $\mu$m to about 10.0 $\mu$m, or from about 0.1 $\mu$m to about 9.0 $\mu$m, or from about 0.1 $\mu$m to about 8.0 $\mu$m, or from about 0.5 $\mu$m to about 50.0 $\mu$m, or from about 0.5 $\mu$m to about 40.0 $\mu$m, or from about 0.5 $\mu$m to about 30.0 $\mu$m, or from about 0.5 $\mu$m to about 20.0 $\mu$m, or from about 0.5 $\mu$m to about 15.0 $\mu$m, or from about 0.5 $\mu$m to about 10.0 $\mu$m, or from about 0.5 $\mu$m to about 9.0 $\mu$m, or from about 0.5 $\mu$m to about 8.0 $\mu$m, or from about 1.0 $\mu$m to about 50.0 $\mu$m, or from about 1.0 $\mu$m to about 40.0 $\mu$m, or from about 1.0 $\mu$m to about 30.0 $\mu$m, or from about 1.0 $\mu$m to about 20.0 $\mu$m, or from about 1.0 $\mu$m to about 15.0 $\mu$m, or from about 1.0 $\mu$m to about 10.0 $\mu$m, or from about 1.0 $\mu$m to about 9.0 $\mu$m, or from about 1.0 $\mu$m to about 8.0 $\mu$m, or from about 2.0 $\mu$m to about 50.0 $\mu$m, or from about 2.0 $\mu$m to about 40.0 $\mu$m, or from about 2.0 $\mu$m to about 30.0 $\mu$m, or from about 2.0 $\mu$m to about 20.0 $\mu$m, or from about 2.0 $\mu$m to about 15.0 $\mu$m, or from about 2.0 $\mu$m to about 10.0 $\mu$m, or from about 2.0 $\mu$m to about 9.0 $\mu$m, or from about 2.0 $\mu$m to about 8.0 $\mu$m, or from about 2.5 $\mu$m to about 50.0 $\mu$m, or from about 2.5 $\mu$m to about 40.0 $\mu$m, or from about 2.5 $\mu$m to about 30.0 $\mu$m, or from about 2.5 $\mu$m to about 20.0 $\mu$m, or from about 2.5 $\mu$m to about 15.0 $\mu$m, or from about 2.5 $\mu$m to about 10.0 $\mu$m, or from about 2.5 $\mu$m to about 9.0 $\mu$m, or from about 2.5 $\mu$m to about 8.0 $\mu$m, or from about 3.0 $\mu$m to about 50.0 $\mu$m, or from about 3.0 $\mu$m to about 40.0 $\mu$m, or from about 3.0 $\mu$m to about 30.0 $\mu$m, or from about 3.0 $\mu$m to about 20.0 $\mu$m, or from about 3.0 $\mu$m to about 15.0 $\mu$m, or from about 3.0 $\mu$m to about 10.0 $\mu$m, or from about 3.0 $\mu$m to about 9.0 $\mu$m, or from about 3.0 $\mu$m to about 8.0 $\mu$m, or from about 4.0 $\mu$m to about 20.0 $\mu$m, or from about 4.0 $\mu$m to about 15.0 $\mu$m, or from about 4.0 $\mu$m to about 10.0 $\mu$m, or from about 4.0 $\mu$m to about 9.0 $\mu$m, or from about 5.0 $\mu$m to about 10.0 $\mu$m, or from about 5.0 $\mu$m to about 9.0 $\mu$m, or from about 6.0 $\mu$m to about 10.0 $\mu$m, or from about 6.0 $\mu$m to about 9.0 $\mu$m, or from about 6.0 $\mu$m to about 8.0 $\mu$m, or from about 7.0 $\mu$m to about 8.0 $\mu$m, or from about 1.0 $\mu$m to about 7.0 $\mu$m, or from about 1.0 $\mu$m to about 6.0 $\mu$m, or from about 1.0 $\mu$m to about 5.0 $\mu$m, or from about 2.0 $\mu$m to about

7.0 μm, or from about 2.0 μm to about 6.0 μm, or from about 2.0 μm to about 5.0 μm, or from about 2.0 μm to about 4.0 μm, or from about 3.0 μm to about 4.0 μm.

For example, the polymer composition may comprise, based on the total weight of the polymer composition: from about 5.0 wt. % to about 95.0 wt. %, for example, from about 10.0 wt. % to about 95.0 wt. %, or from about 10.0 wt. % to about 90.0 wt. %, or from about 10.0 wt. % to about 80.0 wt. %, or from about 20.0 wt. % to about 80 wt. %, or from about 30.0 wt. % to about 80.0 wt. %, or from about 30.0 wt. % to about 70.0 wt. %, or from about 40.0 wt. % to about 80.0 wt. %, or from about 40.0 w.t % to about 80.0 wt. %, or from about 50.0 wt. % to about 80.0 wt. %, or from about 50.0 wt. % to about 70.0 wt. %, or from about 40.0 wt. % to about 95.0 wt. %, or from about 40.0 wt. % to about 90.0 wt. %, or from about 50.0 wt. % to about 95.0 wt. %, or from about 50.0 wt. % to about 90.0 wt. %, of polymer, for example, chlorine-containing polymer, for example, polyvinyl chloride; and from about 0.1 wt. % to about 50.0 wt. %, for example from about 0.05 wt. % to about 50.0 wt. %, for example, from about 0.05 wt. % to about 20.0 wt. %, or from about 0.05 wt. % to about 10.0 wt. %, or from about 0.05 wt. % to about 5.0 wt. %, or from about 0.05 wt. % to about 2.0 wt. %, or from about 0.05 wt. % to about 1.0 wt. %, or from about 0.1 wt. % to about 50.0 wt. %, or from about 0.1 wt. % to about 20.0 wt. %, or from about 0.1 wt. % to about 10.0 wt. %, or from about 0.1 wt. % to about 5.0 wt. %, or from about 0.1 wt. % to about 2.0 wt. %, or from about 0.1 wt. % to about 1.0 wt. %, or from about 0.5 wt. % to about 10.0 wt. %, or from about 0.5 wt. % to about 5.0 wt. %, or from about 0.5 wt. % to about 3.0 wt. %, or from about 0.5 wt. % to about 2.0 wt. %, or from about 0.5 wt. % to about 1.0 wt. %, of alkaline earth metal carbonate, for example, calcium carbonate (e.g., PCC) having a BET specific surface area of at least 40 $m^2$/g, for example, at least 50 $m^2$/g, or at least 60 $m^2$/g, or at least 70 $m^2$/g, and having a $d_{50}$ of from about 0.1 μm to about 50.0 μm, for example, from about 0.1 μm to about 40.0 μm, or from about 0.1 μm to about 30.0 μm, or from about 0.1 μm to about 20.0 μm, or from about 0.1 μm to about 15.0 μm, or from about 0.1 μm to about 10.0 μm, or from about 0.1 μm to about 9.0 μm, or from about 0.1 μm to about 8.0 μm, or from about 0.5 μm to about 50.0 μm, or from about 0.5 μm to about 40.0 μm, or from about 0.5 μm to about 30.0 μm, or from about 0.5 μm to about 20.0 μm, or from about 0.5 μm to about 15.0 μm, or from about 0.5 μm to about 10.0 μm, or from about 0.5 μm to about 9.0 μm, or from about 0.5 μm to about 8.0 μm, or from about 1.0 μm to about 50.0 μm, or from about 1.0 μm to about 40.0 μm, or from about 1.0 μm to about 30.0 μm, or from about 1.0 μm to about 20.0 μm, or from about 1.0 μm to about 15.0 μm, or from about 1.0 μm to about 10.0 μm, or from about 1.0 μm to about 9.0 μm, or from about 1.0 μm to about 8.0 μm, or from about 2.0 μm to about 50.0 μm, or from about 2.0 μm to about 40.0 μm, or from about 2.0 μm to about 30.0 μm, or from about 2.0 μm to about 20.0 μm, or from about 2.0 μm to about 15.0 μm, or from about 2.0 μm to about 10.0 μm, or from about 2.0 μm to about 9.0 μm, or from about 2.0 μm to about 8.0 μm, or from about 2.5 μm to about 50.0 μm, or from about 2.5 μm to about 40.0 μm, or from about 2.5 μm to about 30.0 μm, or from about 2.5 μm to about 20.0 μm, or from about 2.5 μm to about 15.0 μm, or from about 2.5 μm to about 10.0 μm, or from about 2.5 μm to about 9.0 μm, or from about 2.5 μm to about 8.0 μm, or from about 3.0 μm to about 50.0 μm, or from about 3.0 μm to about 40.0 μm, or from about 3.0 μm to about 30.0 μm, or from about 3.0 μm to about 20.0 μm, or from about 3.0 μm to about 15.0 μm, or from about 3.0 μm to about 10.0 μm, or from about 3.0 μm to about 9.0 μm, or from about 3.0 μm to about 8.0 μm, or from about 4.0 μm to about 20.0 μm, or from about 4.0 μm to about 15.0 μm, or from about 4.0 μm to about 10.0 μm, or from about 4.0 μm to about 9.0 μm, or from about 5.0 μm to about 10.0 μm, or from about 5.0 μm to about 9.0 μm, or from about 6.0 μm to about 10.0 μm, or from about 6.0 μm to about 9.0 μm, or from about 6.0 μm to about 8.0 μm, or from about 7.0 μm to about 8.0 μm, or from about 1.0 μm to about 7.0 μm, or from about 1.0 μm to about 6.0 μm, or from about 1.0 μm to about 5.0 μm, or from about 2.0 μm to about 7.0 μm, or from about 2.0 μm to about 6.0 μm, or from about 2.0 μm to about 5.0 μm, or from about 2.0 μm to about 4.0 μm, or from about 3.0 μm to about 4.0 μm.

The polymer composition may comprise, based on the total weight of the polymer composition, from about 0.1 wt. % to about 50.0 wt. %, for example, from about 0.05 wt. % to about 50.0 wt. %, for example, from about 0.05 wt. % to about 20.0 wt. %, or from about 0.05 wt. % to about 10.0 wt. %, or from about 0.05 wt. % to about 5.0 wt. %, or from about 0.05 wt. % to about 2.0 wt. %, or from about 0.05 wt. % to about 1.0 wt. %, or from about 0.1 wt. % to about 50.0 wt. %, or from about 0.1 wt. % to about 20.0 wt. %, or from about 0.1 wt. % to about 10.0 wt. %, or from about 0.1 wt. % to about 5.0 wt. %, or from about 0.1 wt. % to about 2.0 wt. %, or from about 0.1 wt. % to about 1.0 wt. %, or from about 0.5 wt. % to about 10.0 wt. %, or from about 0.5 wt. % to about 5.0 wt. %, or from about 0.5 wt. % to about 3.0 wt. %, or from about 0.5 wt. % to about 2.0 wt. %, or from about 0.5 wt. % to about 1.0 wt. %, of alkaline earth metal carbonate, for example, calcium carbonate (e.g., PCC) having a BET specific surface area of at least 40 $m^2$/g, for example, at least 50 $m^2$/g, or at least 60 $m^2$/g, or at least 70 $m^2$/g, and comprising (e.g. consisting of) agglomerates of interlinked primary particles having an average particle size ($d_p$) of from about 0.5 nm to about 100.0 nm, for example, from about 1.0 nm to about 50.0 nm, or from about 5.0 nm to about 50.0 nm, or from about 10.0 nm to about 50.0 nm, or from about 10.0 nm to about 40.0 nm, or from about 15.0 nm to about 35.0 nm, or from about 1.0 nm to about 25.0 nm, or from about 5.0 nm to about 25.0 nm, or from about 10.0 nm to about 25.0 nm, or from about 15.0 nm to about 25.0 nm, or from about 15.0 nm to about 20.0 nm, or from about 18.0 nm to about 20.0 nm, or from about 20.0 nm to about 100.0 nm, or from about 20.0 nm to about 50.0 nm, or from about 20.0 nm to about 40.0 nm, or from about 25.0 nm to about 50.0 nm, or from about 25.0 nm to about 40.0 nm, or from about 25.0 nm to about 35.0 nm, or from about 30.0 nm to about 35.0 nm.

For example, the polymer composition may comprise, based on the total weight of the polymer composition: from about 5.0 wt. % to about 95.0 wt. %, for example, from about 10.0 wt. % to about 95.0 wt. %, or from about 10.0 wt. % to about 90.0 wt. %, or from about 10.0 wt. % to about 80.0 wt. %, or from about 20.0 wt. % to about 80 wt. %, or from about 30.0 wt. % to about 80.0 wt. %, or from about 30.0 wt. % to about 70.0 wt. %, or from about 40.0 wt. % to about 80.0 wt. %, or from about 40.0 w.t % to about 80.0 wt. %, or from about 50.0 wt. % to about 80.0 wt. %, or from about 50.0 wt. % to about 70.0 wt. %, or from about 40.0 wt. % to about 95.0 wt. %, or from about 40.0 wt. % to about 90.0 wt. %, or from about 50.0 wt. % to about 95.0 wt. %, or from about 50.0 wt. % to about 90.0 wt. %, of polymer, for example, chlorine-containing polymer, for example, polyvinyl chloride; and from about 0.05 wt. % to about 50.0 wt. %, for example, from about 0.05 wt. % to about 20.0 wt. %, or from about 0.05 wt. % to about 10.0 wt. %, or from about 0.05 wt. % to about 5.0 wt. %, or from about 0.05 wt. % to about 2.0 wt. %, or from about 0.05 wt. % to about 1.0 wt. %, or from about 0.1 wt. % to about 50.0 wt. %, or from about 0.1 wt. % to about 20.0 wt. %, or from about 0.1 wt. % to about 10.0 wt. %, or from about 0.1 wt. % to about 5.0 wt. %, or from about 0.1 wt. % to about 2.0 wt. %, or from about 0.1 wt. % to about 1.0 wt. %, or from about 0.5 wt. % to about 10.0 wt. %, or from about 0.5 wt. % to about 5.0 wt. %, or from about 0.5 wt. % to about 3.0 wt. %, or from about 0.5 wt. % to about 2.0 wt. %, or from about 0.5 wt. % to about 1.0 wt. %, of alkaline earth metal carbonate, for example, calcium carbonate (e.g., PCC) having a BET specific surface area of at least 40 $m^2/g$, for example, at least 50 $m^2/g$, or at least 60 $m^2/g$, or at least 70 $m^2/g$, and comprising (e.g. consisting of) agglomerates of interlinked primary particles having an average particle size ($d_p$) of from about 0.5 nm to about 100.0 nm, for example, from about 1.0 nm to about 50.0 nm, or from about 5.0 nm to about 50.0 nm, or from about 10.0 nm to about 50.0 nm, or from about 10.0 nm to about 40.0 nm, or from about 15.0 nm to about 35.0 nm, or from about 1.0 nm to about 25.0 nm, or from about 5.0 nm to about 25.0 nm, or from about 10.0 nm to about 25.0 nm, or from about 15.0 nm to about 25.0 nm, or from about 15.0 nm to about 20.0 nm, or from about 18.0 nm to about 20.0 nm, or from about 20.0 nm to about 100.0 nm, or from about 20.0 nm to about 50.0 nm, or from about 20.0 nm to about 40.0 nm, or from about 25.0 nm to about 50.0 nm, or from about 25.0 nm to about 40.0 nm, or from about 25.0 nm to about 35.0 nm, or from about 30.0 nm to about 35.0 nm.

The polymer composition may comprise, based on the total weight of the polymer composition, from about 0.1 wt. % to about 50.0 wt. %, for example, from about 0.05 wt. % to about 50.0 wt. %, for example, from about 0.05 wt. % to about 20.0 wt. %, or from about 0.05 wt. % to about 10.0 wt. %, or from about 0.05 wt. % to about 5.0 wt. %, or from about 0.05 wt. % to about 2.0 wt. %, or from about 0.05 wt. % to about 1.0 wt. %, or from about 0.1 wt. % to about 50.0 wt. %, or from about 0.1 wt. % to about 20.0 wt. %, or from about 0.1 wt. % to about 10.0 wt. %, or from about 0.1 wt. % to about 5.0 wt. %, or from about 0.1 wt. % to about 2.0 wt. %, or from about 0.1 wt. % to about 1.0 wt. %, or from about 0.5 wt. % to about 10.0 wt. %, or from about 0.5 wt. % to about 5.0 wt. %, or from about 0.5 wt. % to about 3.0 wt. %, or from about 0.5 wt. % to about 2.0 wt. %, or from about 0.5 wt. % to about 1.0 wt. %, of alkaline earth metal carbonate, for example, calcium carbonate (e.g., PCC) having a BET specific surface area of at least 40 $m^2/g$, for example, at least 50 $m^2/g$, or at least 60 $m^2/g$, or at least 70 $m^2/g$, and an average (BJH) pore size of from about 1.0 nm to about 100.0 nm, for example, from about 2.0 nm to about 50.0 nm, or from about 3.0 nm to about 40.0 nm, or from about 4.0 nm to about 40.0 nm, or from about 5.0 nm to about 35.0 nm, or from about 1.0 nm to about 30.0 nm, or from about 1.0 nm to about 25.0 nm, or from about 3.0 nm to about 25.0 nm, or from about 5.0 nm to about 20.0 nm, or from about 5.0 nm to about 100.0 nm, or from about 5.0 nm to about 50.0 nm, or from about 5.0 nm to about 40.0 nm, or from about 8.0 nm to about 40.0 nm, or from about 10.0 nm to about 35.0 nm.

For example, the polymer composition may comprise, based on the total weight of the polymer composition: from about 5.0 wt. % to about 95.0 wt. %, for example, from about 10.0 wt. % to about 95.0 wt. %, or from about 10.0 wt. % to about 90.0 wt. %, or from about 10.0 wt. % to about 80.0 wt. %, or from about 20.0 wt. % to about 80 wt. %, or from about 30.0 wt. % to about 80.0 wt. %, or from about 30.0 wt. % to about 70.0 wt. %, or from about 40.0 wt. % to about 80.0 wt. %, or from about 40.0 w.t % to about 80.0 wt. %, or from about 50.0 wt. % to about 80.0 wt. %, or from about 50.0 wt. % to about 70.0 wt. %, or from about 40.0 wt. % to about 95.0 wt. %, or from about 40.0 wt. % to about 90.0 wt. %, or from about 50.0 wt. % to about 95.0 wt. %, or from about 50.0 wt. % to about 90.0 wt. %, of polymer, for example, chlorine-containing polymer, for example, polyvinyl chloride; and from about 0.05 wt. % to about 50.0 wt. %, for example, from about 0.05 wt. % to about 20.0 wt. %, or from about 0.05 wt. % to about 10.0 wt. %, or from about 0.05 wt. % to about 5.0 wt. %, or from about 0.05 wt. % to about 2.0 wt. %, or from about 0.05 wt. % to about 1.0 wt. %, or from about 0.1 wt. % to about 50.0 wt. %, or from about 0.1 wt. % to about 20.0 wt. %, or from about 0.1 wt. % to about 10.0 wt. %, or from about 0.1 wt. % to about 5.0 wt. %, or from about 0.1 wt. % to about 2.0 wt. %, or from about 0.1 wt. % to about 1.0 wt. %, or from about 0.5 wt. % to about 10.0 wt. %, or from about 0.5 wt. % to about 5.0 wt. %, or from about 0.5 wt. % to about 3.0 wt. %, or from about 0.5 wt. % to about 2.0 wt. %, or from about 0.5 wt. % to about 1.0 wt. %, or from about 5.0 wt. % to about 10.0 wt. %, of alkaline earth metal carbonate, for example, calcium carbonate (e.g., PCC) having a BET specific surface area of at least 40 $m^2/g$, for example, at least 50 $m^2/g$, or at least 60 $m^2/g$, or at least 70 $m^2/g$, and an average (BJH) pore size of from about 1.0 nm to about 100.0 nm, for example, from about 2.0 nm to about 50.0 nm, or from about 3.0 nm to about 40.0 nm, or from about 4.0 nm to about 40.0 nm, or from about 5.0 nm to about 35.0 nm, or from about 1.0 nm to about 30.0 nm, or from about 1.0 nm to about 25.0 nm, or from about 3.0 nm to about 25.0 nm, or from about 5.0 nm to about 20.0 nm, or from about 5.0 nm to about 100.0 nm, or from about 5.0 nm to about 50.0 nm, or from about 5.0 nm to about 40.0 nm, or from about 8.0 nm to about 40.0 nm, or from about 10.0 nm to about 35.0 nm.

The polymer composition may comprise, based on the total weight of the polymer composition, from about 0.05 wt. % to about 50.0 wt. %, for example, from about 0.05 wt. % to about 20.0 wt. %, or from about 0.05 wt. % to about 10.0 wt. %, or from about 0.05 wt. % to about 5.0 wt. %, or from about 0.05 wt. % to about 2.0 wt. %, or from about 0.05 wt. % to about 1.0 wt. %, or from about 0.1 wt. % to about 50.0 wt. %, or from about 0.1 wt. % to about 20.0 wt. %, or from about 0.1 wt. % to about 10.0 wt. %, or from about 0.1 wt. % to about 5.0 wt. %, or from about 0.1 wt. % to about 2.0 wt. %, or from about 0.1 wt. % to about 1.0 wt. %, or from about 0.5 wt. % to about 10.0 wt. %, or from about 0.5 wt. % to about 5.0 wt. %, or from about 0.5 wt. % to about 3.0 wt. %, or from about 0.5 wt. % to about 2.0 wt. %, or from about 0.5 wt. % to about 1.0 wt. %, of alkaline earth metal carbonate, for example, calcium carbonate (e.g., PCC) having a BET specific surface area of at least 40 $m^2/g$, for example, at least 50 $m^2/g$, or at least 60 $m^2/g$, or at least 70 $m^2/g$, a $d_{50}$ of from about 0.1 $\mu m$ to about 50.0 $\mu m$, for example, from about 0.1 $\mu m$ to about 40.0 $\mu m$, or from about 0.1 $\mu m$ to about 30.0 $\mu m$, or from about 0.1 $\mu m$ to about 20.0 $\mu m$, or from about 0.1 $\mu m$ to about 15.0 $\mu m$, or from about 0.1 $\mu m$ to about 10.0 $\mu m$, or from about 0.1 $\mu m$ to about 9.0 $\mu m$, or from about 0.1 $\mu m$ to about 8.0 $\mu m$, or from about 0.5 $\mu m$ to about 50.0 $\mu m$, or from about 0.5 $\mu m$ to about 40.0 $\mu m$, or from about 0.5 $\mu m$ to about 30.0 $\mu m$, or from about 0.5 $\mu m$ to about 20.0 $\mu m$, or from about 0.5 $\mu m$ to about 15.0 $\mu m$, or from about 0.5 $\mu m$ to about 10.0 $\mu m$, or from about 0.5 $\mu m$ to about 9.0 $\mu m$, or from about 0.5 $\mu m$ to about 8.0 $\mu m$, or from about 1.0 $\mu m$ to about 50.0 $\mu m$, or from about 1.0 $\mu m$ to about 40.0 $\mu m$, or from about 1.0 $\mu m$ to about 30.0 $\mu m$, or from about 1.0 $\mu m$ to about 20.0 $\mu m$, or from about 1.0 $\mu m$ to about 15.0 $\mu m$, or from about 1.0 $\mu m$ to about 10.0 $\mu m$, or from about 1.0 $\mu m$ to about 9.0 $\mu m$, or from about 1.0 $\mu m$ to about 8.0 $\mu m$, or from about 2.0 $\mu m$ to about 50.0 $\mu m$, or from about 2.0 $\mu m$ to about 40.0 $\mu m$, or from about 2.0 $\mu m$ to about 30.0 $\mu m$, or from about 2.0 $\mu m$ to about 20.0 $\mu m$, or from about 2.0 $\mu m$ to about 15.0 $\mu m$, or from about 2.0 $\mu m$ to about 10.0 $\mu m$, or from about 2.0 $\mu m$ to about 9.0 $\mu m$, or from about 2.0 $\mu m$ to about 8.0 $\mu m$, or from about 2.5 $\mu m$ to about 50.0 $\mu m$, or from about 2.5 $\mu m$ to about 40.0 $\mu m$, or from about 2.5 $\mu m$ to about 30.0 $\mu m$, or from about 2.5 $\mu m$ to about 20.0 $\mu m$, or from about 2.5 $\mu m$ to about 15.0 $\mu m$, or from about 2.5 $\mu m$ to about 10.0 $\mu m$, or from about 2.5 $\mu m$ to about 9.0 $\mu m$, or from about 2.5 $\mu m$ to about 8.0 $\mu m$, or from about 3.0 $\mu m$ to about 50.0 $\mu m$, or from about 3.0 $\mu m$ to about 40.0 $\mu m$, or from about 3.0 $\mu m$ to about 30.0 $\mu m$, or from about 3.0 $\mu m$ to about 20.0 $\mu m$, or from about 3.0 $\mu m$ to about 15.0 $\mu m$, or from about 3.0 $\mu m$ to about 10.0 $\mu m$, or from about 3.0 $\mu m$ to about 9.0 $\mu m$, or from about 3.0 $\mu m$ to about 8.0 $\mu m$, or from about 4.0 $\mu m$ to about 20.0 $\mu m$, or from about 4.0 $\mu m$ to about 15.0 $\mu m$, or from about 4.0 $\mu m$ to about 10.0 $\mu m$, or from about 4.0 $\mu m$ to about 9.0 $\mu m$, or from about 5.0 $\mu m$ to about 10.0 $\mu m$, or from about 5.0 $\mu m$ to about 9.0 $\mu m$, or from about 6.0 $\mu m$ to about 10.0 $\mu m$, or from about 6.0 $\mu m$ to about 9.0 $\mu m$, or from about 6.0 $\mu m$ to about 8.0 $\mu m$, or from about 7.0 $\mu m$ to about 8.0 $\mu m$, or from about 1.0 $\mu m$ to about 7.0 $\mu m$, or from about 1.0 $\mu m$ to about 6.0 $\mu m$, or from about 1.0 $\mu m$ to about 5.0 $\mu m$, or from about 2.0 $\mu m$ to about 7.0 $\mu m$, or from about 2.0 $\mu m$ to about 6.0 $\mu m$, or from about 2.0 $\mu m$ to about 5.0 $\mu m$, or from about 2.0 $\mu m$ to about 4.0 $\mu m$, or from about 3.0 $\mu m$ to about 4.0 $\mu m$, an average (BJH) pore size of from about 1.0 nm to about 100.0 nm, for example, from about 2.0 nm to about 50.0 nm, or from about 3.0 nm to about 40.0 nm, or from about 4.0 nm to about 40.0 nm, or from about 5.0 nm to about 35.0 nm, or from about 1.0 nm to about 30.0 nm, or from about 1.0 nm to about 25.0 nm, or from about 3.0 nm to about 25.0 nm, or from about 5.0 nm to about 20.0 nm, or from about 5.0 nm to about 100.0 nm, or from about 5.0 nm to about 50.0 nm, or from about 5.0 nm to about 40.0 nm, or from about 8.0 nm to about 40.0 nm, or from about 10.0 nm to about 35.0 nm, and comprising (e.g. consisting of) agglomerates of interlinked primary particles having an average particle size ($d_p$) of from about 0.5 nm to about 100.0 nm, for example, from about 1.0 nm to about 50.0 nm, or from about 5.0 nm to about 50.0 nm, or from about 10.0 nm to about 50.0 nm, or from about 10.0 nm to about 40.0 nm, or from about 15.0 nm to about 35.0 nm, or from about 1.0 nm to about 25.0 nm, or from about 5.0 nm to about 25.0 nm, or from about 10.0 nm to about 25.0 nm, or from about 15.0 nm to about 25.0 nm, or from about 15.0 nm to about 20.0 nm, or from about 18.0 nm to about 20.0 nm, or from about 20.0 nm to about 100.0 nm, or from about 20.0 nm to about 50.0 nm, or from about 20.0 nm to about 40.0 nm, or from about 25.0 nm to about 50.0 nm, or from about 25.0 nm to about 40.0 nm, or from about 25.0 nm to about 35.0 nm, or from about 30.0 nm to about 35.0 nm.

For example, the polymer composition may comprise, based on the total weight of the polymer composition: from about 5.0 wt. % to about 95.0 wt. %, for example, from about 10.0 wt. % to about 95.0 wt. %, or from about 10.0 wt. % to about 90.0 wt. %, or from about 10.0 wt. % to about 80.0 wt. %, or from about 20.0 wt. % to about 80 wt. %, or from about 30.0 wt. % to about 80.0 wt. %, or from about 30.0 wt. % to about 70.0 wt. %, or from about 40.0 wt. % to about 80.0 wt. %, or from about 40.0 w.t % to about 80.0 wt. %, or from about 50.0 wt. % to about 80.0 wt. %, or from about 50.0 wt. % to about 70.0 wt. %, or from about 40.0 wt. % to about 95.0 wt. %, or from about 40.0 wt. % to about 90.0 wt. %, or from about 50.0 wt. % to about 95.0 wt. %, or from about 50.0 wt. % to about 90.0 wt. %, of polymer, for example, chlorine-containing polymer, for example, polyvinyl chloride; and from about 0.05 wt. % to about 50.0 wt. %, for example, from about 0.05 wt. % to about 20.0 wt. %, or from about 0.05 wt. % to about 10.0 wt. %, or from about 0.05 wt. % to about 5.0 wt. %, or from about 0.05 wt. % to about 2.0 wt. %, or from about 0.05 wt. % to about 1.0 wt. %,

or from about 0.1 wt. % to about 50.0 wt. %, or from about 0.1 wt. % to about 20.0 wt. %, or from about 0.1 wt. % to about 10.0 wt. %, or from about 0.1 wt. % to about 5.0 wt. %, or from about 0.1 wt. % to about 2.0 wt. %, or from about 0.1 wt. % to about 1.0 wt. %, or from about 0.5 wt. % to about 10.0 wt. %, or from about 0.5 wt. % to about 5.0 wt. %, or from about 0.5 wt. % to about 3.0 wt. %, or from about 0.5 wt. % to about 2.0 wt. %, or from about 0.5 wt. % to about 1.0 wt. %, of alkaline earth metal carbonate, for example, calcium carbonate (e.g., PCC) having a BET specific surface area of at least 40 $m^2/g$, for example, at least 50 $m^2/g$, or at least 60 $m^2/g$, or at least 70 $m^2/g$, a $d_{50}$ of from about 0.1 $\mu$m to about 50.0 $\mu$m, for example, from about 0.1 $\mu$m to about 40.0 $\mu$m, or from about 0.1 $\mu$m to about 30.0 $\mu$m, or from about 0.1 $\mu$m to about 20.0 $\mu$m, or from about 0.1 $\mu$m to about 15.0 $\mu$m, or from about 0.1 $\mu$m to about 10.0 $\mu$m, or from about 0.1 $\mu$m to about 9.0 $\mu$m, or from about 0.1 $\mu$m to about 8.0 $\mu$m, or from about 0.5 $\mu$m to about 50.0 $\mu$m, or from about 0.5 $\mu$m to about 40.0 $\mu$m, or from about 0.5 $\mu$m to about 30.0 $\mu$m, or from about 0.5 $\mu$m to about 20.0 $\mu$m, or from about 0.5 $\mu$m to about 15.0 $\mu$m, or from about 0.5 $\mu$m to about 10.0 $\mu$m, or from about 0.5 $\mu$m to about 9.0 $\mu$m, or from about 0.5 $\mu$m to about 8.0 $\mu$m, or from about 1.0 $\mu$m to about 50.0 $\mu$m, or from about 1.0 $\mu$m to about 40.0 $\mu$m, or from about 1.0 $\mu$m to about 30.0 $\mu$m, or from about 1.0 $\mu$m to about 20.0 $\mu$m, or from about 1.0 $\mu$m to about 15.0 $\mu$m, or from about 1.0 $\mu$m to about 10.0 $\mu$m, or from about 1.0 $\mu$m to about 9.0 $\mu$m, or from about 1.0 $\mu$m to about 8.0 $\mu$m, or from about 2.0 $\mu$m to about 50.0 $\mu$m, or from about 2.0 $\mu$m to about 40.0 $\mu$m, or from about 2.0 $\mu$m to about 30.0 $\mu$m, or from about 2.0 $\mu$m to about 20.0 $\mu$m, or from about 2.0 $\mu$m to about 15.0 $\mu$m, or from about 2.0 $\mu$m to about 10.0 $\mu$m, or from about 2.0 $\mu$m to about 9.0 $\mu$m, or from about 2.0 $\mu$m to about 8.0 $\mu$m, or from about 2.5 $\mu$m to about 50.0 $\mu$m, or from about 2.5 $\mu$m to about 40.0 $\mu$m, or from about 2.5 $\mu$m to about 30.0 $\mu$m, or from about 2.5 $\mu$m to about 20.0 $\mu$m, or from about 2.5 $\mu$m to about 15.0 $\mu$m, or from about 2.5 $\mu$m to about 10.0 $\mu$m, or from about 2.5 $\mu$m to about 9.0 $\mu$m, or from about 2.5 $\mu$m to about 8.0 $\mu$m, or from about 3.0 $\mu$m to about 50.0 $\mu$m, or from about 3.0 $\mu$m to about 40.0 $\mu$m, or from about 3.0 $\mu$m to about 30.0 $\mu$m, or from about 3.0 $\mu$m to about 20.0 $\mu$m, or from about 3.0 $\mu$m to about 15.0 $\mu$m, or from about 3.0 $\mu$m to about 10.0 $\mu$m, or from about 3.0 $\mu$m to about 9.0 $\mu$m, or from about 3.0 $\mu$m to about 8.0 $\mu$m, or from about 4.0 $\mu$m to about 20.0 $\mu$m, or from about 4.0 $\mu$m to about 15.0 $\mu$m, or from about 4.0 $\mu$m to about 10.0 $\mu$m, or from about 4.0 $\mu$m to about 9.0 $\mu$m, or from about 5.0 $\mu$m to about 10.0 $\mu$m, or from about 5.0 $\mu$m to about 9.0 $\mu$m, or from about 6.0 $\mu$m to about 10.0 $\mu$m, or from about 6.0 $\mu$m to about 9.0 $\mu$m, or from about 6.0 $\mu$m to about 8.0 $\mu$m, or from about 7.0 $\mu$m to about 8.0 $\mu$m, or from about 1.0 $\mu$m to about 7.0 $\mu$m, or from about 1.0 $\mu$m to about 6.0 $\mu$m, or from about 1.0 $\mu$m to about 5.0 $\mu$m, or from about 2.0 $\mu$m to about 7.0 $\mu$m, or from about 2.0 $\mu$m to about 6.0 $\mu$m, or from about 2.0 $\mu$m to about 5.0 $\mu$m, or from about 2.0 $\mu$m to about 4.0 $\mu$m, or from about 3.0 $\mu$m to about 4.0 $\mu$m, an average (BJH) pore size of from about 1.0 nm to about 100.0 nm, for example, from about 2.0 nm to about 50.0 nm, or from about 3.0 nm to about 40.0 nm, or from about 4.0 nm to about 40.0 nm, or from about 5.0 nm to about 35.0 nm, or from about 1.0 nm to about 30.0 nm, or from about 1.0 nm to about 25.0 nm, or from about 3.0 nm to about 25.0 nm, or from about 5.0 nm to about 20.0 nm, or from about 5.0 nm to about 100.0 nm, or from about 5.0 nm to about 50.0 nm, or from about 5.0 nm to about 40.0 nm, or from about 8.0 nm to about 40.0 nm, or from about 10.0 nm to about 35.0 nm, and comprising (e.g. consisting of) agglomerates of interlinked primary particles having an average particle size ($d_p$) of from about 0.5 nm to about 100.0 nm, for example, from about 1.0 nm to about 50.0 nm, or from about 5.0 nm to about 50.0 nm, or from about 10.0 nm to about 50.0 nm, or from about 10.0 nm to about 40.0 nm, or from about 15.0 nm to about 35.0 nm, or from about 1.0 nm to about 25.0 nm, or from about 5.0 nm to about 25.0 nm, or from about 10.0 nm to about 25.0 nm, or from about 15.0 nm to about 25.0 nm, or from about 15.0 nm to about 20.0 nm, or from about 18.0 nm to about 20.0 nm, or from about 20.0 nm to about 100.0 nm, or from about 20.0 nm to about 50.0 nm, or from about 20.0 nm to about 40.0 nm, or from about 25.0 nm to about 50.0 nm, or from about 25.0 nm to about 40.0 nm, or from about 25.0 nm to about 35.0 nm, or from about 30.0 nm to about 35.0 nm.

The polymer composition may be a paint, a coating (e.g. a varnish) or an adhesive composition. The polymer composition may be a wire or cable coating composition.

The polymer composition may be made by, for example, mixing one or more polymers, the mineral filler (e.g. the alkaline earth metal carbonate (for example, the calcium carbonate (e.g., PCC)), and optionally curing the mixture.

The polymer compositions described herein may, for example, be made by compounding one or more polymers with the mineral filler (e.g. the alkaline earth metal carbonate (for example, the calcium carbonate (e.g., PCC)). Compounding *perse* is a technique which is well known to persons skilled in the art of polymer processing and manufacture and consists of preparing plastic formulations by mixing and/or blending polymers and optional additives in a molten state. It is understood in the art that compounding is distinct from blending or mixing processes conducted at temperatures below that at which the constituents become molten. Compounding may, for example, be used to form a masterbatch composition. Compounding may, for example, involve adding a masterbatch composition to a polymer to form a further polymer composition.

The polymer compositions described herein may, for example, be extruded. For example, compounding may be carried out using a screw, e.g. a twin screw, compounder, for example, a Baker Perkins 25 mm twin screw compounder. For example, compounding may be carried out using a multi roll mill, for example a two-roll mill. For example, compounding may be carried out using a co-kneader or internal mixer. The methods disclosed herein may, for example, include compression moulding or injection moulding. The polymer and/or mineral filler (e.g. the alkaline earth metal carbonate (for example, the calcium carbonate (e.g., PCC)) and/or optional additives may be premixed and fed from a single hopper.

The resulting melt may, for example, be cooled, for example in a water bath, and then pelletized. The resulting melt may be calendared to form a sheet or film.

The polymer compositions described herein may, for example, be shaped into a desired form or article. Shaping of the polymer compositions may, for example, involve heating the composition to soften it. The polymer compositions described herein may, for example, be shaped by molding (e.g. compression molding, injection molding, stretch blow molding, injection blow molding, overmolding), extrusion, casting, or themoforming.

In certain embodiments, the polymer composition comprises polyvinyl chloride and PCC having a $d_{50}$ from about 3.0 $\mu$m to about 4.0 $\mu$m, for example, about 3.3 $\mu$m and a BET surface area of from about 40 $m^2/g$ to about 50 $m^2/g$, for example, about 44.5 $m^2/g$. For example, the polymer composition may comprise from about 45 wt. % to about 55 wt. %, for example, about 49 wt. %, of polyvinyl chloride and from about 0.5 wt. % to about 1.5 wt. %, for example, about 1.0 wt. %, of PCC having a $d_{50}$ from about 3.0 $\mu$m to about 4.0 $\mu$m, for example, about 3.3 $\mu$m and a BET surface area of from about 40 $m^2/g$ to about 50 $m^2/g$, for example, about 44.5 $m^2/g$. The polymer composition may additionally comprise GCC having a $d_{50}$ from about 2.0 $\mu$m to about 3.0 $\mu$m, for example, about 2.4 $\mu$m. For example, the polymer composition may additionally comprise from about 20.0 wt. %, to about 30.0 wt. %, for example, about 24 wt. %, of GCC having a $d_{50}$ from about 2.0 $\mu$m to about 3.0 $\mu$m, for example, about 2.4 $\mu$m. The polymer composition may comprise further additives including stabilizers (e.g. calcium-zinc based stabilisers) and plasticizers (e.g. diisononyl phthalate). The polymer composition may comprise from about 0.5 wt. % to about 3 wt. %, for example, about 1.5 wt. %, of stabilizers (e.g. calcium-zinc based stabilisers). The polymer composition may comprise from about 20.0 wt. %, to about 30.0 wt. %, for example, about 24 wt. %, of plasticizers (e.g. diisononyl phthalate).

In certain embodiments, the polymer composition comprises polyvinyl chloride and PCC having a $d_{50}$ from about 7.0 $\mu$m to about 8.0 $\mu$m, for example, about 7.7 $\mu$m and a BET surface area of from about 70 $m^2/g$ to about 90 $m^2/g$, for example, about 80 $m^2/g$. For example, the polymer composition may comprise from about 45 wt. % to about 55 wt. %, for example, about 49 wt. %, of polyvinyl chloride and from about 0.5 wt. % to about 1.5 wt. %, for example, about 1.0 wt. %, of PCC having a $d_{50}$ from about 7.0 $\mu$m to about 8.0 $\mu$m, for example, about 7.7 $\mu$m $\mu$m and a BET surface area of from about 70 $m^2/g$ to about 90 $m^2/g$, for example, about 80 $m^2/g$. The polymer composition may additionally comprise GCC having a $d_{50}$ from about 2.0 $\mu$m to about 3.0 $\mu$m, for example, about 2.4 $\mu$m. For example, the polymer composition may additionally comprise from about 20.0 wt. %, to about 30.0 wt. %, for example, about 24 wt. %, of GCC having a $d_{50}$ from about 2.0 $\mu$m to about 3.0 $\mu$m, for example, about 2.4 $\mu$m. The polymer composition may comprise further additives including stabilizers (e.g. calcium-zinc based stabilisers) and plasticizers (e.g. diisononyl phthalate). The polymer composition may comprise from about 0.5 wt. % to about 3 wt. %, for example, about 1.5 wt. %, of stabilizers (e.g. calcium-zinc based stabilisers). The polymer composition may comprise from about 20.0 wt. %, to about 30.0 wt. %, for example, about 24 wt. %, of plasticizers (e.g. diisononyl phthalate).

*Thermal stability*

The thermal stability of the polymer composition may be measured by the Congo Red Paper test in accordance with ISO 182-1. It will be appreciated that, according to the Congo Red Paper test, the thermal stability is expressed as a time (typically measured in minutes) taken for Congo Red Paper to change colour when exposed to a sample of the polymer composition subjected to heating.

It may be that the polymer composition exhibits a thermal stability, measured by Congo Red Paper test in accordance with ISO 182-1, of greater than 15 minutes, for example, greater than 16 minutes, or greater than 17 minutes, or greater than 18 minutes, or greater than 19 minutes, or greater than 20 minutes, or greater than 21 minutes, or greater than 22 minutes, or greater than 23 minutes, or greater than 24 minutes, or greater than 25 minutes, or greater than 30 minutes, or greater than 35 minutes, or greater than 40 minutes, or greater than 45 minutes, or greater than 50 minutes, or greater than 55 minutes, or greater than 60 minutes, or greater than 65 minutes, or greater than 70 minutes, or greater than 75 minutes, or greater than 80 minutes, or greater than 85 minutes. It may be that the polymer composition exhibits a thermal stability, measured by Congo Red Paper test in accordance with ISO 182-1, of no greater than 90 minutes. It may be that the polymer composition exhibits a thermal stability, measured by Congo Red Paper test in accordance with ISO 182-1, of from 15 minutes to 90 minutes, for example, from 20 minutes to 90 minutes, or from 30 minutes to 90 minutes, or from 40 minutes to 90 minutes, or from 50 minutes to 90 minutes, or from 60 minutes to 90 minutes, or from 70 minutes to 90 minutes, or from 80 minutes to 90 minutes.

It may be that the polymer composition exhibits a thermal stability, measured by Congo Red Paper test in accordance with ISO 182-1, of greater than 15 minutes, for example, greater than 16 minutes, or greater than 17 minutes, or greater than 18 minutes, or greater than 19 minutes, or greater than 20 minutes, or greater than 21 minutes, or greater than 22 minutes, or greater than 23 minutes, or greater than 24 minutes, or greater than 25 minutes, or greater than 30 minutes, or greater than 35 minutes, or greater than 40 minutes, or greater than 45 minutes, or greater than 50 minutes, or greater than 55 minutes, or greater than 60 minutes, or greater than 65 minutes, or greater than 70 minutes, or greater than 75 minutes, or greater than 80 minutes, or greater than 85 minutes, at 200°C. It may be that the polymer composition exhibits a thermal stability, measured by Congo Red Paper test in accordance with ISO 182-1, of no greater than 90 minutes at 200°C. It may be that the polymer composition exhibits a thermal stability, measured by Congo Red Paper test in accordance with ISO 182-1, of from 15 minutes to 90 minutes, for example, from 20 minutes to 90 minutes, or from 30 minutes to 90 minutes, or from 40 minutes to 90 minutes, or from 50 minutes to 90 minutes, or from 60 minutes to 90 minutes, or from 70 minutes to 90 minutes, or from 80 minutes to 90 minutes, at 200°C.

It may be that the polymer composition exhibits a thermal stability, measured by Congo Red Paper test in accordance with ISO 182-1, which is at least 10 %, for example, at least 20 %, or at least 30 %, or at least 40 %, or at least 50 %, or at least 100 %, or at least 150 %, greater than the thermal stability, measured by Congo Red Paper test in accordance with ISO 182-1, of a reference composition identical to the said polymer composition in all ways except that the reference composition lacks the alkaline earth metal carbonate having a BET specific surface area of at least 40 $m^2/g$, for example, at least 50 $m^2/g$, or at least 60 $m^2/g$, or at least 70 $m^2/g$. The reference composition may comprise a different alkaline earth metal carbonate, for example, an alkaline earth metal carbonate (e.g., calcium carbonate, PCC, GCC) having a BET specific surface area of less than 70 $m^2/g$, for example, less than 60 $m^2/g$, or less than 50 $m^2/g$, or less than 40 $m^2/g$.

It may be that the polymer composition exhibits a thermal stability, measured by Congo Red Paper test in accordance with ISO 182-1, which is at least 1.2, for example, at least 1.3, or at least 1.4, or at least 1.5, or at least 2.0, or at least 2.5, times the thermal stability, measured by Congo Red Paper test in accordance with ISO 182-1, of a reference composition identical to the said polymer composition in all ways except that the reference composition lacks the alkaline earth metal carbonate having a BET specific surface area of at least 40 $m^2/g$, for example, at least 50 $m^2/g$, or at least 60 $m^2/g$, or at least 70 $m^2/g$. The reference composition may comprise a different alkaline earth metal carbonate, for example, an alkaline earth metal carbonate (e.g., calcium carbonate, PCC, GCC) having a BET specific surface area of less than 70 $m^2/g$, for example, less than 60 $m^2/g$, or less than 50 $m^2/g$, or less than 40 $m^2/g$.

It may be that: (a) the polymer composition comprises, based on the total weight of the polymer composition from about 20.0 wt. % to about 80.0 wt. %, for example, from about 30.0 wt. % to about 70.0 wt. %, of polymer, for example, polyvinyl chloride, and from about 10.0 wt. % to about 40.0 wt. %, for example, from about 20.0 wt. % to about 30.0 wt. %, of mineral filler, wherein the mineral filler comprises, based on the total weight of the mineral filler, from about 0.5 wt. % to about 10.0 wt. %, for example from about 1.0 wt. % to about 5.0 wt. %, of alkaline earth metal carbonate having a BET specific surface area of at least 40 $m^2/g$; and (b) the polymer composition exhibits a thermal stability, measured by Congo Red Paper test in accordance with ISO 182-1, of greater than 15 minutes, for example, greater than 20 minutes, or greater than 25 minutes or (c) the polymer composition exhibits a thermal stability, measured by Congo Red Paper test in accordance with ISO 182-1, which is at least 10 %, for example, at least 20 %, or at least 30 %, or at least 40 %, or at least 50 %, or at least 100 %, or at least 150 %, greater than the thermal stability, measured by Congo Red Paper test in accordance with ISO 182-1, of a reference composition identical to the said polymer composition in all ways except that the reference composition lacks the alkaline earth metal carbonate having a BET specific surface area of at least 40 $m^2/g$.

*Articles of manufacture*

One or more articles may be manufactured using the polymer composition. The one or more articles of manufacture may comprise one or more components formed from the polymer composition. The one or more articles of manufacture may be formed (e.g., predominantly, or entirely) from the polymer composition.

An article of manufacture comprising, e.g. formed from, the polymer composition may be a coating for an electrical wire. An article of manufacture comprising, e.g. formed from, the polymer composition may be a coating for an electrical cable. An article of manufacture comprising, e.g. formed from, the polymer composition may be a housing for an electrical wire. An article of manufacture comprising, e.g. formed from, the polymer composition may be a housing for an electrical cable.

The article of manufacture may be a coating or housing for one or more electrical wires or cables, for example, electrical wire or cable insulation or jacket, formed from the polymer composition comprising one or more chlorine-containing polymers, for example, polyvinyl chloride, and a mineral filler comprising alkaline earth metal carbonate, for example, calcium carbonate (e.g., PCC), having a BET specific surface area of at least 40 $m^2/g$, for example, at least 50 $m^2/g$, or at least 60 $m^2/g$, or at least 70 $m^2/g$.

An article of manufacture comprising, e.g. formed from, the polymer composition may be a tile. The tile may be a floor tile, for example, a kitchen or bathroom floor tile. The tile may be a laminate tile, for example, a laminate kitchen or bathroom floor tile.

The article of manufacture may be a tile, for example a floor tile, formed from the polymer composition comprising one or more chlorine-containing polymers, for example, polyvinyl chloride, and a mineral filler comprising alkaline earth metal carbonate, for example, calcium carbonate (e.g., PCC), having a BET specific surface area of at least 40 $m^2/g$,

for example, at least 50 m$^2$/g, or at least 60 m$^2$/g, or at least 70 m$^2$/g.

The article of manufacture may be a laminate. The article of manufacture may comprise (e.g. be formed of) two or more layers, for example, two or more layers having different compositions. The article of manufacture may comprise (e.g. be formed of) two or more layers, at least one of said two or more layers comprising (e.g. being formed from) the polymer composition comprising the alkaline earth metal carbonate according to the various aspects described herein, wherein one or more of the said two or more layers contains chlorine or a source of chlorine or a source of HCl (for example, a chlorine-containing polymer). For example, it may be that at least one of the two or more layers comprises (e.g. is formed from) the polymer composition comprising the alkaline earth metal carbonate according to the various aspects described herein and that at least another (i.e. different) layer of the two or more layers contains chlorine or a source of chlorine or a source of HCl (for example, a chlorine-containing polymer). It may be that the at least one of the two or more layers which comprises (e.g. is formed from) the polymer composition comprising the alkaline earth metal carbonate according to the various aspects described herein does not contain chlorine or a source of chlorine or a source of HCl.

For the avoidance of doubt, the present application is directed to the subject-matter described in the following numbers paragraphs:

1. Use of an alkaline earth metal carbonate having a BET specific surface area of at least 40 m$^2$/g in a polymer composition to retard degradation, for example, thermal degradation, of the polymer composition.

2. Use of an alkaline earth metal carbonate having a BET specific surface area of at least 40 m$^2$/g in a polymer composition to increase the thermal stability, for example, the "Congo red" thermal stability, of the polymer composition.

3. Use of an alkaline earth metal carbonate having a BET specific surface area of at least 40 m$^2$/g in a polymer composition to scavenge one or more acids, for example, HCl, in the polymer composition.

4. Use of an alkaline earth metal carbonate having a BET specific surface area of at least 40 m$^2$/g in a polymer composition to reduce combustive release of one or more acids, for example, HCl.

5. Use of an alkaline earth metal carbonate having a BET specific surface area of at least 40 m$^2$/g in a polymer composition to reduce the amount of combustion product released on combustion of the polymer composition.

6. Use of an alkaline earth metal carbonate having a BET specific surface area of at least 40 m$^2$/g in a polymer composition to reduce combustion product toxicity and/or corrosivity, for example, acidity.

7. A method of retarding degradation, for example, thermal degradation, of a polymer composition, wherein the method comprises adding an alkaline earth metal carbonate having a BET specific surface area of at least 40 m$^2$/g to the polymer composition.

8. A method of increasing the thermal stability, for example, the "Congo red" thermal stability, of a polymer composition, wherein the method comprises adding an alkaline earth metal carbonate having a BET specific surface area of at least 40 m$^2$/g to the polymer composition.

9. A method of scavenging one or more acids, for example, HCl, from a polymer composition, wherein the method comprises adding an alkaline earth metal carbonate having a BET specific surface area of at least 40 m$^2$/g to the polymer composition.

10. A method of reducing combustive release of one or more acids, for example, HCl, from a polymer composition, wherein the method comprises adding an alkaline earth metal carbonate having a BET specific surface area of at least 40 m$^2$/g to the polymer composition.

11. A method of reducing the amount of combustion product released on combustion of a polymer composition, wherein the method comprises adding an alkaline earth metal carbonate having a BET specific surface area of at least 40 m$^2$/g to the polymer composition.

12. A method of reducing combustion product toxicity and/or corrosivity, for example, acidity, of a polymer composition, wherein the method comprises adding an alkaline earth metal carbonate having a BET specific surface area of at least 40 m$^2$/g to the polymer composition.

13. The use according to any one of numbered paragraphs 1 to 6 or the method according to any one of numbered paragraphs 7 to 12, wherein the alkaline earth metal carbonate is calcium carbonate, for example, precipitated calcium carbonate.

14. The use or method according to any one preceding numbered paragraph, wherein the alkaline earth metal carbonate has a BET specific surface of at least 50 m$^2$/g, for example, at least 60 m$^2$/g, or at least 70 m$^2$/g, or at least 80 m$^2$/g.

15. The use or method according to any one preceding numbered paragraph, wherein the alkaline earth metal carbonate has a d$_{50}$ from about 1.0 $\mu$m to about 15.0 $\mu$m, for example, from about 2.0 $\mu$m to about 10.0 $\mu$m.

16. The use or method according to any one preceding numbered paragraph, wherein the alkaline earth metal carbonate comprises agglomerates each consisting of a plurality of interlinked primary particles, the primary particles having, for example, an average particle size (d$_p$) from about 1.0 nm to about 40.0 nm.

17. The use or method according to any one preceding numbered paragraph, wherein the alkaline earth metal carbonate has an average (BJH) pore size from about 1.0 nm to about 50.0 nm.

18. The use or method according to any one preceding numbered paragraph, wherein the alkaline earth metal carbonate has an average pore volume of no less than about 0.05 cm$^3$/g.

19. The method or use according to any one preceding numbered paragraph, wherein the polymer comprises one or more polymers susceptible to dehydrohalogenation, for example, dehydrochlorination, on heating.

20. The use or method according to any one preceding numbered paragraph, wherein the polymer composition comprises one or more chlorine-containing polymers, for example, polyvinyl chloride.

21. The use or method according to any one preceding numbered paragraph, wherein the polymer composition comprises one or more polymers which degrade, for example, discolour, in the presence of a halogen halide, for example, hydrogen chloride.

22. The use or method according to any one preceding numbered paragraph, wherein the polymer composition comprises one or more flame retardants, for example, alumina trihydrate or magnesium hydroxide.

23. Polymer composition comprising at least one polymer and a mineral filler, wherein the mineral filler comprises an alkaline earth metal carbonate having a BET specific surface area of at least 40 m$^2$/g.

24. The polymer composition according to numbered paragraph 23, wherein the alkaline earth metal carbonate is calcium carbonate, for example, precipitated calcium carbonate.

25. The polymer composition according to numbered paragraph 23 or numbered paragraph 24, wherein the alkaline earth metal carbonate has a BET specific surface area of at least 50 m$^2$/g, for example, at least 60 m$^2$/g, or at least 70 m$^2$/g, or at least 80 m$^2$/g.

26. The polymer composition according to any one of numbered paragraphs 23 to 25, wherein the alkaline earth metal carbonate has a d$_{50}$ from about 1.0 $\mu$m to about 15.0 $\mu$m, for example, from about 2.0 $\mu$m to about 10.0 $\mu$m, or from about 5.0 $\mu$m to about 10.0 $\mu$m.

27. The polymer composition according to any one of numbered paragraphs 23 to 26, wherein the alkaline earth metal carbonate comprises agglomerates each consisting of a plurality of interlinked primary particles, the primary particles having, for example, an average particle size (d$_p$) from about 1.0 nm to about 30.0 nm, for example, from about 10.0 nm to about 35.0 nm, or from about 15.0 nm to about 35.0 nm, or from about 15.0 nm to about 25.0 nm.

28. The polymer composition according to any one of numbered paragraphs 23 to 27, wherein the alkaline earth metal carbonate has an average (BJH) pore size from about 1.0 nm to about 50.0 nm, for example, from about 5.0 nm to about 40.0 nm.

29. The polymer composition according to any one of numbered paragraphs 23 to 28 comprising one or more polymers susceptible to dehydrohalogenation, for example, dehydrochlorination, on heating.

30. The polymer composition according to any one of numbered paragraphs 23 to 29 comprising at one or more chlorine-containing polymers, for example, polyvinyl chloride.

31. The polymer composition according to any one of numbered paragraphs 23 to 30 comprising one or more polymers which degrade, for example, discolour, in the presence of a halogen halide, for example, hydrogen chloride.

32. The polymer composition according to any one of numbered paragraphs 23 to 31 comprising, based on the total weight of the polymer composition: from about 20.0 wt. % to about 80.0 wt. %, for example, from about 30.0 wt. % to about 70.0 wt. %, of polymer; and from about 0.05 wt. % to about 20.0 wt. %, for example, from about 0.1 wt. % to about 10.0 wt. %, or from about 0.1 wt. % to about 5.0 wt. %, of alkaline earth metal carbonate having a BET specific surface area of at least 40 $m^2/g$, for example, at least 50$m^2/g$.

33. The polymer composition according to any one of numbered paragraphs 23 to 31 comprising, based on the total weight of the polymer composition: from about 20.0 wt. % to about 80.0 wt. %, for example, from about 30.0 wt. % to about 70.0 wt. %, of polymer; and from about 10.0 wt. % to about 40.0 wt. %, for example, from about 20.0 wt. % to about 30.0 wt. %, of mineral filler.

34. The polymer composition according to any one of numbered paragraphs 22 to 33, wherein the mineral filler comprises, based on the total weight of the mineral filler, from about 0.5 wt. % to about 10.0 wt. %, for example, from about 1.0 wt. % to about 5.0 wt. %, of alkaline earth metal carbonate having a BET specific surface area of at least 40 $m^2/g$, for example, at least 50 $m^2/g$.

35. The polymer composition according to any one of numbered paragraphs 22 to 34 further comprising one or more flame retardants, for example, alumina trihydrate or magnesium hydroxide.

36. The polymer composition according to any one of numbered paragraphs 22 to 35, wherein the polymer composition exhibits a thermal stability, measured by Congo Red Paper test in accordance with ISO 182-1, of greater than 20 minutes, for example, greater than 25 minutes, at 200°C.

37. The polymer composition according to any one of numbered paragraphs 22 to 36, wherein the polymer composition exhibits a thermal stability, measured by Congo Red Paper test in accordance with ISO 182-1, which is at least 20 %, for example, at least 40 %, greater than the thermal stability, measured by Congo Red Paper test in accordance with ISO 182-1, of a reference composition identical to the polymer composition in all ways except that the reference composition lacks alkaline earth metal carbonate having a BET specific surface area of at least 40 $m^2/g$, for example at least 50 $m^2/g$.

38. An article of manufacture comprising, for example, formed from, the polymer composition according to any one of numbered paragraphs 12 to 37.

39. The article of manufacture according to numbered paragraph 38, wherein said article of manufacture is a coating or housing for one or more electrical wires or cables, for example, electrical wire or cable insulation or jacket.

40. The article of manufacture according to numbered paragraph 38, wherein said article of manufacture is a tile, for example, a floor tile.

41. Alkaline earth metal carbonate for use as a mineral filler in a polymer composition, the alkaline earth metal carbonate having a BET specific surface area of at least 40 $m^2/g$.

42. The alkaline earth metal carbonate according to numbered paragraph 41, wherein the alkaline earth metal carbonate is precipitated calcium carbonate in the form of agglomerates each consisting of a plurality of interlinked primary particles, the primary particles having, for example, an average particle size ($d_p$) from about 1.0 nm to about 35.0 nm, for example, from about 10.0 nm to about 35.0 nm, or from about 15.0 nm to about 35.0 nm, or from about 15.0 nm to about 25.0 nm.

**EXAMPLES**

Five compositions, specified in Table 1 as 'Control', 'Test 1', 'Test 2', 'Test 3', and 'Test 4', were prepared by dry-blending the components first before transferring the blend to a twin-roll mill at 155°C for 5 to 10 minutes. The compositions were compression moulded between metal plates at 170°C for up to 4 minutes and then cooled down by pressing between room-temperature metal plates.

The PVC (Evipol SH 6630) is a vinyl chloride homopolymer. Stabiol CZ 3281/1 is a calcium-zinc based polymer stabiliser. Diisononyl phthalate (DINP) is a plasticizer.

GCC filler is a GCC having a $d_{50}$ (by sedigraph) of 2.4 $\mu$m, residue on sieve (38 $\mu$m) less than or equal to 0.015 %.The 'Control' composition did not include any other calcium carbonate.

The following minerals were tested in the 'Test 1', 'Test 2', 'Test 3', and 'Test 4' formulations.

PCC 1 is a porous PCC having a BET surface area of about 32 $m^2$/g and a $d_{50}$ (laser) of about 3.5 $\mu$m. PCC 1 has a $d_p$ of about 50 nm and a BJH average pore size of 16.5 nm and a porous volume of 0.05 $cm^3$/g. PCC 1 has a fibrous particle morphology with fibres aggregated in microshells.

PCC 2 is a porous PCC having a BET surface area of about 80 $m^2$/g and a $d_{50}$ (laser) of about 7.68 $\mu$m. PCC 2 has a $d_p$ of about 19 nm and a BJH average pore size of 11 nm and a porous volume of 0.19 $cm^3$/g. PCC 2 forms relatively small primary particles which are randomly aggregated into a porous structure.

PCC 3 is a porous PCC having a BET surface area of about 44.5 $m^2$/g and a $d_{50}$ (laser) of about 3.35 $\mu$m. PCC 1 has a $d_p$ of about 32 nm and a BJH average pore size of 15 nm and a porous volume of 0.12 $cm^3$/g. PCC 3 has a fibrous particle morphology with fibres aggregated in microshells.

PCC 4 is a non-porous PCC having a BET surface area of about 20 $m^2$/g and a $d_{50}$ (laser) of about 0.5 $\mu$m. PCC 4 has a $d_p$ of about 19 nm. PCC4 has a rhomboid particle morphology with random particle aggregation.

**Table 1.**

|  | Control | Test 1 | Test 2 | Test 3 | Test 4 |
|---|---|---|---|---|---|
| PVC (Evipol SH 6630) | 100 | 100 | 100 | 100 | 100 |
| Stabiliser (Stabiol CZ 3281/1) | 3 | 3 | 3 | 3 | 3 |
| Diisononyl phtalate (DINP) | 50 | 50 | 50 | 50 | 50 |
| GCC filler | 50 | 50 | 50 | 50 | 50 |
| PCC 1 (Socal UP) |  | 2 |  |  |  |
| PCC 2 |  |  | 2 |  |  |
| PCC 3 |  |  |  | 2 |  |
| PCC 4 (Socal 31) |  |  |  |  | 2 |
| (Amounts in phr) | | | | | |

Thermal stability was analysed by tracking a change in pH using Congo Red paper at 200°C according to the 'Congo Red paper test' described in to ISO 182-1. The time taken for the Congo Red paper to change colour was recorded and the results are shown in Table 2.

**Table 2.**

|  | Control | Test 1 | Test 2 | Test 3 | Test 4 |
|---|---|---|---|---|---|
| Time to colour change (minutes) | 12 | 14 | 32 | 19 | 13 |

In PVC, it was surprisingly found that PCC2 (in 'Test 2') and PCC 3 (in 'Test 3') increased the time to colour change by 166 % and 58 %, respectively, compared to the Control. Expressed in another way, PCC 2 increased the time to colour change by a factor of 2.7 while PCC 3 increased the time to colour change by a factor of 1.5, compared to the Control. PCC 1 and PCC 4 provided modest benefits over the Control.

**Claims**

1. Use of an alkaline earth metal carbonate having a BET specific surface area of at least 40 m$^2$/g in a polymer composition to:

   (a) retard degradation, for example, thermal degradation, of the polymer composition;
   (b) increase the thermal stability, for example, the thermal stability as measured by the Congo Red Paper test in accordance with ISO 182-1, of the polymer composition;
   (c) scavenge one or more acids, for example, HCl, in the polymer composition;
   (d) reduce combustive release of one or more acids, for example, HCl;
   (e) reduce the amount of combustion product released on combustion of the polymer composition; or
   (f) reduce combustion product toxicity and/or corrosivity, for example, acidity.

2. A method of:

   (a) retarding degradation, for example, thermal degradation, of a polymer composition;
   (b) increasing the thermal stability, for example, thermal stability as measured by the Congo Red Paper test in accordance with ISO 182-1, of a polymer composition;
   (c) scavenging one or more acids, for example, HCl, from a polymer composition;
   (d) reducing combustive release of one or more acids, for example, HCl, from a polymer composition;
   (e) reducing the amount of combustion product released on combustion of a polymer composition; or
   (f) reducing combustion product toxicity and/or corrosivity, for example, acidity, of a polymer composition;

   wherein the method comprises adding an alkaline earth metal carbonate having a BET specific surface area of at least 40 m$^2$/g to the polymer composition.

3. The use according to claim 1 or the method according to claim 2, wherein the alkaline earth metal carbonate is calcium carbonate, for example, precipitated calcium carbonate.

4. The use or method according to any one preceding claim, wherein the alkaline earth metal carbonate:

   (a) has a BET specific surface area of at least 50 m$^2$/g, for example, at least 60 m$^2$/g, or at least 70 m$^2$/g, or at least 80 m$^2$/g; and/or
   (b) has a d$_{50}$ from about 1.0 $\mu$m to about 15.0 $\mu$m, for example, from about 2.0 $\mu$m to about 10.0 $\mu$m; and/or
   (c) comprises agglomerates each consisting of a plurality of interlinked primary particles, the primary particles having, for example, an average particle size (d$_p$) from about 1.0 nm to about 40.0 nm; and/or
   (d) has an average (BJH) pore size from about 1.0 nm to about 50.0 nm; and/or
   (e) has an average pore volume of no less than about 0.05 cm$^3$/g.

5. The use or method according to any one preceding claim, wherein the polymer composition comprises one or more polymers:

   (a) susceptible to dehydrohalogenation, for example, dehydrochlorination, on heating; and/or
   (b) which degrade, for example, discolour, in the presence of a halogen halide, for example, hydrogen chloride.

6. The use or method according to any one preceding claim, wherein the polymer composition comprises one or more chlorine-containing polymers, for example, polyvinyl chloride.

7. Polymer composition comprising at least one polymer and a mineral filler, wherein the mineral filler comprises an alkaline earth metal carbonate having a BET specific surface area of at least 40 m$^2$/g.

8. The polymer composition according to claim 7, wherein the alkaline earth metal carbonate is calcium carbonate, for example, precipitated calcium carbonate.

9. The polymer composition according to claim 7 or claim 8, wherein the alkaline earth metal carbonate:

   (a) has a BET specific surface area of at least 50 m$^2$/g, for example, at least 60 m$^2$/g, or at least 70 m$^2$/g, or at least 80 m$^2$/g; and/or

(b) has a $d_{50}$ from about 1.0 $\mu$m to about 15.0 $\mu$m, for example, from about 3.0 $\mu$m to about 10.0 $\mu$m, or from about 5.0 $\mu$m to about 10.0 $\mu$m; and/or

(c) comprises agglomerates each consisting of a plurality of interlinked primary particles, the primary particles having, for example, an average particle size ($d_p$) from about 1.0 nm to about 35.0 nm, for example, from about 10.0 nm to about 35.0 nm, or from about 15.0 nm to about 35.0 nm, or from about 15.0 nm to about 25.0 nm; and/or

(d) has an average (BJH) pore size from about 1.0 nm to about 50.0 nm, for example, from about 5.0 nm to about 40.0 nm; and/or

(e) has an average pore volume of no less than about 0.05 cm$^3$/g.

10. The polymer composition according to any one of claims 7 to 9 comprising one or more polymers:

(a) susceptible to dehydrohalogenation, for example, dehydrochlorination, on heating; and/or
(b) which degrade, for example, discolour, in the presence of a halogen halide, for example, hydrogen chloride.

11. The polymer composition according to any one of claims 7 to 10 comprising one or more chlorine-containing polymers, for example, polyvinyl chloride.

12. The polymer composition according to any one of claims 7 to 11 comprising, based on the total weight of the polymer composition: from about 20.0 wt. % to about 80.0 wt. %, for example, from about 30.0 wt. % to about 70.0 wt. %, of polymer; and from about 0.05 wt. % to about 20.0 wt. %, for example, from about 0.1 wt. % to about 10.0 wt. %, or from about 1.0 wt. % to about 5.0 wt. %, of alkaline earth metal carbonate having a BET specific surface area of at least 40 m$^2$/g.

13. The polymer composition according to any one of claims 7 to 12 comprising, based on the total weight of the polymer composition: from about 20.0 wt. % to about 80.0 wt. %, for example, from about 30.0 wt. % to about 70.0 wt. %, of polymer; and from about 10.0 wt. % to about 40.0 wt. %, for example, from about 20.0 wt. % to about 30.0 wt. %, of mineral filler; wherein, optionally, the mineral filler comprises, based on the total weight of the mineral filler, from about 0.5 wt. % to about 10.0 wt. %, for example, from about 1.0 wt. % to about 5.0 wt. %, of alkaline earth metal carbonate having a BET specific surface area of at least 40 m$^2$/g.

14. The polymer composition according to any one of claims 7 to 13, wherein the polymer composition exhibits a thermal stability, measured by Congo Red Paper test in accordance with ISO 182-1:

(a) of greater than 20 minutes, for example, greater than 25 minutes, at 200°C; and/or
(b) which is at least 20 %, for example, at least 40 %, greater than the thermal stability, measured by Congo Red Paper test in accordance with ISO 182-1, of a reference composition identical to the polymer composition in every way except that the reference composition lacks alkaline earth metal carbonate having a BET specific surface area of at least 40 m$^2$/g.

15. An article of manufacture comprising, for example, or formed from, the polymer composition according to any one of claims 7 to 14, wherein said article of manufacture is optionally:

(a) a coating or housing for one or more electrical wires or cables, for example, electrical wire or cable insulation or jacket; or
(b) a tile, for example, a floor tile.

16. Alkaline earth metal carbonate for use in a polymer composition, the alkaline earth metal carbonate having a BET specific surface area of at least 40 m$^2$/g, and, optionally, the alkaline earth metal carbonate being precipitated calcium carbonate in the form of agglomerates each consisting of a plurality of interlinked primary particles, the primary particles having, for example, an average particle size ($d_p$) from about 1.0 nm to about 35.0 nm, for example, from about 10.0 nm to about 35.0 nm, or from about 15.0 nm to about 35.0 nm, or from about 15.0 nm to about 25.0 nm.

Europäisches
Patentamt

European
Patent Office

Office européen
des brevets

# EUROPEAN SEARCH REPORT

Application Number

EP 18 30 5952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2004/166047 A1 (VOGELS CLAUDE [BE] ET AL) 26 August 2004 (2004-08-26)<br>* paragraphs [0019], [0050], [0051] *<br>* examples 2,4 *<br>* claim 11 * | 7-16<br><br>1-6 | INV.<br>C08K3/26<br>C08K3/014 |
| X | DATABASE WPI<br>Week 201664<br>Thomson Scientific, London, GB;<br>AN 2016-45634Y<br>XP002788014,<br>-& CN 105 733 111 A (WANG S)<br>6 July 2016 (2016-07-06)<br>* abstract *<br>* examples *<br>* claim 6 * | 1-16 | |
| X | DATABASE WPI<br>Week 198136<br>Thomson Scientific, London, GB;<br>AN 1981-64808D<br>XP002788015,<br>-& JP S56 88449 A (SHIRAISHI CHUO KENKYUSHO KK) 17 July 1981 (1981-07-17)<br>* abstract *<br>* paragraph [0001] *<br>* examples * | 1-16 | TECHNICAL FIELDS SEARCHED (IPC)<br><br>C08K |
| X | DATABASE WPI<br>Week 199821<br>Thomson Scientific, London, GB;<br>AN 1998-234599<br>XP002788016,<br>-& JP H10 72215 A (MARUO CALCIUM KK)<br>17 March 1998 (1998-03-17)<br>* abstract *<br>* paragraphs [0012], [0014], [0033] *<br>* examples 1,4-6,8,9 * | 1-16 | |

-/--

The present search report has been drawn up for all claims

| Place of search | Date of completion of the search | Examiner |
|---|---|---|
| Munich | 17 January 2019 | Behm, Sonja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 30 5952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 200779<br>Thomson Scientific, London, GB;<br>AN 2007-851263<br>XP002788017,<br>-& JP 2007 197585 A (MARUO CALCIUM KK)<br>9 August 2007 (2007-08-09)<br>* abstract *<br>* examples *<br>* claims *<br>----- | 1-16 | |

TECHNICAL FIELDS
SEARCHED     (IPC)

The present search report has been drawn up for all claims

| Place of search | Date of completion of the search | Examiner |
|---|---|---|
| Munich | 17 January 2019 | Behm, Sonja |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

**ANNEX TO THE EUROPEAN SEARCH REPORT
ON EUROPEAN PATENT APPLICATION NO.**

EP 18 30 5952

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2019

| Patent document cited in search report | | Publication date | Patent family member(s) | | Publication date |
|---|---|---|---|---|---|
| US 2004166047 | A1 | 26-08-2004 | CN | 1551855 A | 01-12-2004 |
| | | | EP | 1406838 A1 | 14-04-2004 |
| | | | ES | 2553453 T3 | 09-12-2015 |
| | | | FR | 2826950 A1 | 10-01-2003 |
| | | | JP | 4515759 B2 | 04-08-2010 |
| | | | JP | 2004533396 A | 04-11-2004 |
| | | | KR | 20040030727 A | 09-04-2004 |
| | | | US | 2004166047 A1 | 26-08-2004 |
| | | | US | 2009082508 A1 | 26-03-2009 |
| | | | WO | 03004414 A1 | 16-01-2003 |
| CN 105733111 | A | 06-07-2016 | NONE | | |
| JP S5688449 | A | 17-07-1981 | JP | S5688449 A | 17-07-1981 |
| | | | JP | S6023785 B2 | 10-06-1985 |
| JP H1072215 | A | 17-03-1998 | JP | 3058255 B2 | 04-07-2000 |
| | | | JP | H1072215 A | 17-03-1998 |
| JP 2007197585 | A | 09-08-2007 | JP | 4850522 B2 | 11-01-2012 |
| | | | JP | 2007197585 A | 09-08-2007 |

EPO FORM P0459

For more details about this annex : see Official Journal of the European Patent Office, No. 12/82

## REFERENCES CITED IN THE DESCRIPTION

**Patent documents cited in the description**

- WO 03004414 A

**Non-patent literature cited in the description**

- Paper Coating Pigments. *TAPPI Monograph Series No 30,* 34-35

- **BARRETT et al.** *Am. Chem. Soc.,* 1951, vol. 73, 373-380